# EUROPEAN PATENT SPECIFICATION

(11) **EP 3 466 060 B1**
(45) Date of publication and mention of the grant of the patent: **25.02.2026**
(21) Application number: 17729203.4
(22) Date of filing: 27.04.2017
(51) Int. Cl.: H04N 7/18, G08B 13/196, G06T 7/00

(54) **COMPUTATIONAL PROCESSING DEVICE AND COMPUTATIONAL PROCESSING METHOD**
DATENVERARBEITUNGSVORRICHTUNG UND DATENVERARBEITUNGSVERFAHREN
DISPOSITIF DE TRAITEMENT INFORMATIQUE ET PROCÉDÉ DE TRAITEMENT INFORMATIQUE

(30) Priority: 25.05.2016 JP 2016104237; 20.04.2017 JP 2017083376
(43) Date of publication of application: 10.04.2019
(73) Proprietor: Sony Group Corporation, Tokyo 108-0075 (JP)
(72) Inventor: ONO, Yuki, Tokyo 108-0075 (JP)
(74) Representative: D Young & Co LLP
(86) International application number: PCT/JP2017/016778
(87) International publication number: WO 2017/203933

(56) References cited:
- EP-A1- 2 192 549
- US-A1- 2002 140 814

## Description

### Technical Field

The present disclosure relates to a computational processing device and a computational processing method.

### Background Art

In a monitoring system that displays an image of a monitoring target region (monitoring region image) captured by a monitoring camera on a display device provided on the side of a monitoring person (hereinafter also called the operator), technology has been developed in which, by controlling the pan, tilt, and/or zoom of the monitoring camera, it is possible to manually or automatically track a person or an object to monitor. Herein, a monitoring camera with controllable pan, tilt, and/or zoom is also called a PTZ camera. In addition, such control of the pan, tilt, and/or zoom in a PTZ camera is also called PTZ control.

In a monitoring system provided with a PTZ camera, various technologies have been developed to improve operability for the operator when tracking a tracking target. For example, Patent Literature 1 discloses a technology in a monitoring system provided with a wide-angle camera capable of capturing the monitoring target region over a wide angle, and a PTZ camera. The technology detects a moving object from a monitoring region image captured with the wide-angle camera, and in addition, when the operator specifies a tracking target for the monitoring system to automatically track, the technology provides a graphical user interface (GUI) in which is displayed an abstracted image in which the detected moving object has been abstracted. With the GUI, the operator is able to specify a desired region inside the abstracted image as a tracking target for automatic tracking. According to the technology described in Patent Literature 1, the operator is able to specify a tracking target for automatic tracking with a simpler operation.

Additionally, Patent Literature 2 discloses a technology for improving operability for the operator in an environment in which a delay may occur in the transmission of image data from a PTZ camera to the operator's location. Specifically, in the technology described in Patent Literature 2, there is disclosed a technology that overlays a current imaging region from the PTZ camera and the currently displayed display region on the screen of a display device installed on the operator side. According to the technology described in Patent Literature 2, by providing the above overlay display, the operator more easily grasps how much picture delay is occurring, enabling easier operations related to PTZ control by the operator for manual tracking.

### Citation List

### Patent Literature

PTL 1: JP 2006-33188A
PTL 2: JP 2008-301191A
PTL 3: US 2002/140814 A1

### Summary

### Technical Problem

However, in the monitoring system described in Patent Literature 1, multiple cameras are required, and furthermore, since a control system that controls each of these multiple cameras has to be constructed, realizing the system becomes costly. Also, since the detection accuracy of a moving object that acts as a candidate for a tracking target depends on the resolution of the wide-angle camera, there is a risk that accurate detection of a moving object may become difficult when monitoring from afar, for example. In addition, the monitoring system described in Patent Literature 2 aims to reduce the workload of the operator in manual tracking, and does not consider automatic tracking.

Patent Literature 3 discloses a tracking system for switching between manual and automatic tracking of an object.

In light of the above circumstances, in a monitoring system provided with a PTZ camera, there is demand for a technology enabling improved operability for the operator, without creating inexpediencies like the above. Accordingly, embodiments of the present disclosure proposes a new and improved computational processing device and a computational processing method capable of further improving operability for the operator.

### Solution to Problem

According to an embodiment of the present disclosure, there is provided a processing device includes circuitry configured to estimate a tracking target captured in image data by an imaging unit operating in a manual tracking mode, the manual tracking mode being a mode in which the tracking target is tracked by controlling at least one of a pan operation, a tilt operation and a zoom operation of the imaging unit by instructions from an external source.

In addition, according to an embodiment of the present disclosure, there is provided a method that includes estimating with circuitry a tracking target captured in image data by an imaging unit operating in a manual tracking mode, the manual tracking mode being a mode in which the tracking target is tracked by controlling at least one of a pan operation, a tilt operation and a zoom operation of the imaging unit by instructions from an external source..

According to the embodiments of the present disclosure, while an operator is tracking a tracking target by operating the pan, tilt, and/or zoom of a camera in a manual tracking mode, the tracking target is estimated. Consequently, when switching from a manual tracking mode to an automatic tracking mode, the estimated tracking target may be specified directly as the tracking target for the automatic tracking mode. Thus, since the tracking target may be specified as the tracking target for the automatic tracking mode without having the operator perform a complicated operation, operability for the operator may be improved.

### Advantageous Effects of Invention

According to the embodiments of the present disclosure as described above, further improvement in operability for the operator becomes possible. Note that the effects described above are not necessarily limitative. With or in the place of the above effects, there may be achieved any one of the effects described in this specification or other effects that may be grasped from this specification.

### Brief Description of Drawings

[fig.1]FIG. 1 is a block diagram illustrating a schematic configuration of a monitoring system according to the present embodiment.
[fig.2]FIG. 2 is a diagram for explaining an operation by an operator when tracking a tracking target using a monitoring system according to the present embodiment.
[fig.3]FIG. 3 is a diagram for explaining an operation by an operator when tracking a tracking target using a monitoring system according to the present embodiment.
[fig.4]FIG. 4 is a diagram for explaining an operation by an operator when tracking a tracking target using a monitoring system according to the present embodiment.
[fig.5]FIG. 5 is a flowchart illustrating an example of a processing procedure of a computational processing method according to the present embodiment.
[fig.6]FIG. 6 is a flowchart illustrating an example of a processing procedure of a computational processing method according to the present embodiment.
[fig.7]FIG. 7 is a flowchart illustrating an example of a processing procedure of a computational processing method according to the present embodiment.
[fig.8]FIG. 8 is a flowchart illustrating an example of a processing procedure of a computational processing method according to the present embodiment.
[fig.9]FIG. 9 is a flowchart illustrating a processing procedure of one example of a process for estimating a tracking target, namely, a process for estimating a tracking target using color.
[fig.10]FIG. 10 is a flowchart illustrating a processing procedure of one example of a process for estimating a tracking target, namely, a process for estimating a tracking target by detection of a moving object.
[fig.11]FIG. 11 is a block diagram illustrating a schematic configuration of a monitoring system according to a modification in which the device configuration is different.
[fig.12]FIG. 12 is a block diagram illustrating a schematic configuration of a monitoring system according to a modification provided with an electronic PTZ camera.
[fig.13]FIG. 13 is a block diagram illustrating a schematic configuration of a monitoring system according to a modification provided with a drone.
[fig.14]FIG. 14 is a flowchart illustrating an example of a processing procedure of a computational processing method according to a modification provided with a drone.
[fig.15]FIG. 15 is a flowchart illustrating an example of a processing procedure of a computational processing method according to a modification provided with a drone.

### Description of Embodiments

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Hereinafter, the description will proceed in the following order.
1. Background leading up to the present disclosure
2. Configuration of monitoring system
3. Computational processing method
   3-1. Manual tracking mode
      3-1-1. Computational processing method related to driving of camera
      3-1-2. Computational processing method related to generation of display image data
   3-2. Automatic tracking mode
      3-2-1. Computational processing method related to driving of camera
      3-2-2. Computational processing method related to generation of display image data
4. Process of estimating tracking target
   4-1. Process of estimating tracking target by color
   4-2. Process of estimating tracking target by detection of moving object
   4-3. Other processes of estimating tracking target
5. Modifications
   5-1. Modification with different device configuration
   5-2. Modification provided with electronic PTZ camera
   5-3. Modification provided with drone
      5-3-1. Configuration of monitoring system
      5-3-2. Computational processing method
         5-3-2-1. Computational processing method according to operation of drone airframe in manual tracking mode
         5-3-2-2. Computational processing method according to operation of drone airframe in automatic tracking mode
6. Supplemental remarks

### (1. Background leading up to the present disclosure)

Before describing a preferred embodiment of the present disclosure, the background leading up to the inventors' conceiving of the present disclosure will be described.

Recently, the proliferation of monitoring cameras is spreading tremendously, and the recorded duration of video captured yearly is said to already exceed a trillion hours. This trend is expected to accelerate in the future, and is expected to reach a recorded duration several times that of the current level in a few years.

Among monitoring cameras, PTZ cameras are being used in situations such as when monitoring a wide area. In a PTZ camera, PTZ control is conducted according to manual operations by an operator, and a tracking target is tracked. Note that in this specification, tracking refers to the action of conducting PTZ control of a PTZ camera so as to keep a tracking target within the field of view of the PTZ camera. Also, a tracking mode that tracks a tracking target by conducting PTZ control according to pan, tilt, and/or zoom control values (hereinafter also called PTZ control values) corresponding to manual operations by the operator as above is called the manual tracking mode in this specification.

Meanwhile, in recent years, to reduce the workload of the operator, there have appeared devices equipped with a function of using image analysis technology to automatically track a person or an object specified from among a monitoring region image. A tracking mode that tracks a tracking target by conducting PTZ control according to PTZ control values computed by a processor so as to track a specified tracking target in this way is called the automatic tracking mode in this specification.

However, in the automatic tracking mode, automatic tracking is lost in many cases, due to the tracking target intersecting with an obstruction or another moving object, or due to lighting variations of streetlights or the like, and the opinion in the current situation is that perfect automatic tracking has not yet been achieved. Consequently, when automatic tracking is lost, the tracking mode is switched to the manual tracking mode temporarily, the operator operates the pan, tilt, and/or zoom manually, and after making adjustments so that the tracking target is contained in the field of view, the tracking mode is switched back to the automatic tracking mode. Such an operation of switching from the manual tracking mode to the automatic tracking mode by the operator creates the following inexpediences.

In most PTZ cameras, when the operator specifies a tracking target for the automatic tracking mode, moving objects are detected from a monitoring region image captured by the PTZ camera, and there is provided a GUI that overlays frames onto the moving objects inside the monitoring region image. The operator selects one of the frames being displayed on the display screen, thereby specifying a tracking target. At this point, since typically moving object detection is conducted only when the camera is still, when switching the tracking mode from the manual tracking mode to the automatic tracking mode, the operator may be required to go through the following procedure.

Namely, first, the operator stops manual operations, causing the PTZ camera to become still. Next, the operator stands by briefly until moving object detection may be conducted accurately (typically, it takes a few seconds until detection results with good accuracy are obtained). Subsequently, the operator specifies one of the displayed frames indicating tracking target candidates.

Such operations are not only complicated for the operator, but there is the additional risk that the tracking target may go outside the frame while the tracking mode is being switched, and the opportunity to capture an image may be lost.

Also, when monitoring over a network, a picture delay may occur. In other words, a difference may occur between the current imaging region by the PTZ camera and the display region being displayed on a display device on the operator side. At this point, in many systems an ID typically is assigned to a frame overlaid onto a detected moving object, and the frame specified by the operator is identified by the ID, but the ID may vary comparatively easily due to the movement of the person or object. Consequently, when a picture delay occurs as above, sometimes frames having different IDs are assigned to the same moving object between the monitoring region image currently captured by the PTZ camera and the monitoring region image being displayed on the display device on the operator side. In such a situation, the frame specified by the operator is determined not to exist inside the monitoring region image actually being captured, and starting automatic tracking may no longer be possible. In this case, the operator has to repeatedly perform the operator of specifying the tracking target until the tracking target is specified correctly, and thus there is a risk of increasing the burden on the operator.

Meanwhile, another GUI exists in which the operator is able to draw a rectangle on the screen directly by dragging a mouse or the like, and thereby specify a tracking target for the automatic tracking mode. However, accurately specifying a rectangle is difficult while in the middle of operating the pan, tilt, and/or zoom manually.

Herein, for example, as discussed earlier, Patent Literature 1 discloses a technology that aims to reduce the workload of the operator when switching from manual mode to automatic mode, but this technology is not considered to adequately address the inexpediences described above. Specifically, the technology described in Patent Literature 1 relates to a GUI when the operator specifies a tracking target to be tracked automatically, but with this technology, a moving object is detected from a captured image, and the detected moving object is presented to the operator as a tracking target candidate. Consequently, the point of waiting for a certain amount of time in order to conduct the above moving object detection process accurately, and the point of tracking target specification not functioning well due to picture delay, may not be addressed adequately.

The above thus describes the results of the investigations by the inventors regarding typical existing technologies. In light of the investigation results described above, in a monitoring system provided with a PTZ camera, there is demand for a technology that further improves operability for the operator by enabling easier and more accurate specification of a tracking target for the automatic tracking mode. As a result of through investigation into technology for achieving such demand, the inventors conceived of the present disclosure. The following describes specifically preferred embodiments of the present disclosure conceived by the inventors.

### (2. Configuration of monitoring system)

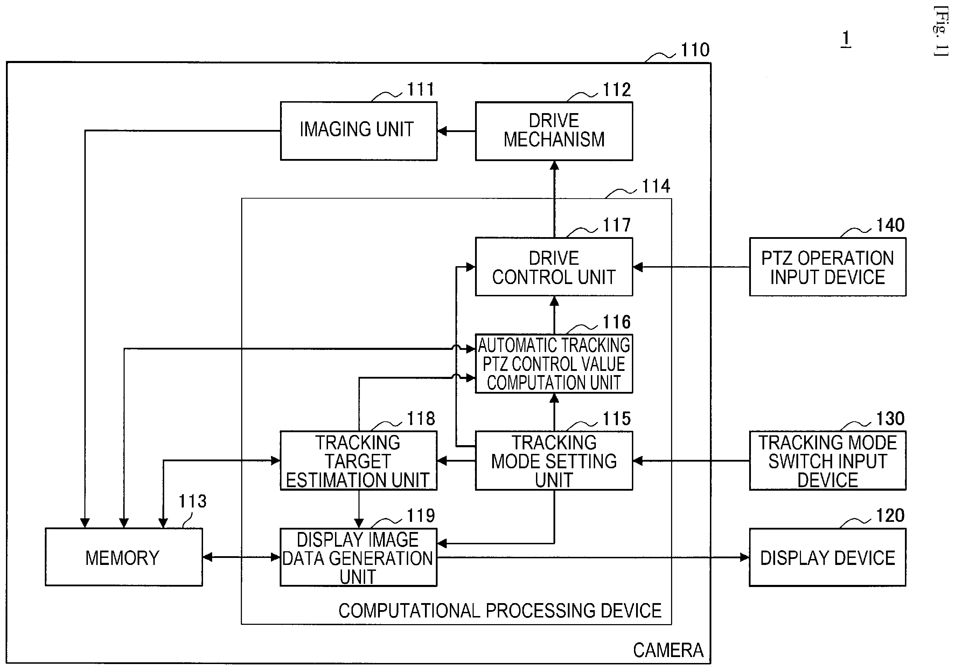

A configuration of a monitoring system according to an embodiment of the present disclosure will be described with reference to FIG. 1. FIG. 1 is a block diagram illustrating a schematic configuration of a monitoring system according to the present embodiment.

Referring to FIG. 1, the monitoring system 1 according to the present embodiment is provided with a camera 110, a display device 120, a tracking mode switch input device 130, and a PTZ operation input device 140. The camera 110 is a PTZ camera, enabling PTZ control according to manual operations by the operator, or automatically. In this way, the monitoring system 1 is a monitoring system provided with a PTZ camera.

Among the devices constituting the monitoring system 1, the camera 110 is installed in a location where a monitoring target region may be captured, while the display device 120, the tracking mode switch input device 130, and the PTZ operation input device 140 are installed in a location where the operator performs monitoring work. In this way, the camera 110 and the other devices are installed in separate locations from each other, and are communicably connected to each other via a network.

The display device 120 is installed in a position visible to the operator, and under control from a display image data generation unit 119 of the camera 110 discussed later, displays a monitoring region image captured by the camera 110, based on display image data generated by the display image data generation unit 119. In addition, while tracking a tracking target in the manual tracking mode or the automatic tracking mode, the display device 120, under control from the same display image data generation unit 119, based on display image data generated by the display image data generation unit 119, displays a frame indicating the tracking target (the tracking target estimation frame 403 or the tracking target display frame 405 discussed later) overlaid onto the monitoring region image. The type of the display device 120 is not limited, and any of various known types of display devices may be used as the display device 120, such as a liquid crystal display device, a plasma display device, or an organic electroluminescence (EL) display device.

The tracking mode switch input device 130 is an input device by which the operator inputs, into a computational processing device 114 or the camera 110, an instruction to switch the tracking mode to the manual tracking mode or the automatic tracking mode. In the present embodiment, an element enabling the input of such a switch instruction in one action, such as a button, for example, is used as the tracking mode switch input device 130. As a result, the operator becomes able to switch the tracking mode with a simpler operation, without performing a complicated operation.

The PTZ operation input device 140 is a device by which the operator inputs, into the computational processing device 114 of the camera 110 discussed later, instructions for operating the pan, tilt, and/or zoom of the camera 110 in the manual tracking mode. PTZ control of the camera 110 is conducted according to operations performed by the operator via the PTZ operation input device 140, and the field of view of the camera 110 is adjusted. Specifically, a joystick or the like may be used as the PTZ operation input device 140. However, the present embodiment is not limited to such an example, and any of various types of input devices typically used for manual tracking operations in a monitoring system provided with a PTZ camera may also be applied as the PTZ operation input device 140.

Note that in the example configuration illustrated in FIG. 1, the tracking mode switch input device 130 and the PTZ operation input device 140 are illustrated as separate devices, but in actuality, these devices may also be configured as a single input device.

The camera 110 includes an imaging unit 111, a drive mechanism 112, memory 113, and a computational processing device 114.

The imaging unit 111 is made up of components such as an image sensor, an optical system that condenses observation light onto the image sensor, and a processing circuit that performs various types of image processing on an image signal obtained by the image sensor.

The image sensor photoelectrically converts observation light condensed by the optical system to thereby generate an electrical signal corresponding to the observation light, or in other words, an image signal corresponding to the observed image (monitoring region image). Note that the image sensor may be any of various known types of image sensors, such as a complementary metal-oxide-semiconductor (CMOS) image sensor or a charge-coupled device (CCD) image sensor.

The optical system is made up of a combination of multiple lenses, including a zoom lens and a focus lens. The optical properties of the optical system are adjusted so that observation light forms an image on the photosensitive surface of the image sensor.

The processing circuit performs various types of image processing on the image signal acquired by the image sensor, and thereby generates image data in a certain data format, such as JPEG, for example. Herein, the data format of the generated image data may be any of various known data formats typically used in a PTZ camera. Also, regarding the method of generating image data, any of various known methods corresponding to the data format may be used, and thus a detailed description of the processing content is omitted herein. The image data generated by the processing circuit is stored in the memory 113.

Note that the specific configuration of the imaging unit 111 is not particularly limited, and any of various configurations used in a typical PTZ camera may be applied.

Herein, in the present embodiment, as discussed later, the display image data generation unit 119 generates image data to be displayed actually on the display device 120, based on image data generated in the processing circuit of the imaging unit 111. In this specification, for the sake of distinction, the image data generated by the imaging unit 111 is also referred to as the captured image data, whereas the image data generated by the display image data generation unit 119 and displayed on the display device 120 is also referred to as the display image data.

The drive mechanism 112 is a drive mechanism such as a motor for changing the pan, tilt, and zoom of the camera 110. Note that in FIG. 1, only an arrow extending from the drive mechanism 112 to the imaging unit 111 is illustrated for the sake of convenience, but in actuality, the drive mechanism 112 is capable of causing respective components of the camera 110 related to pan, tilt, and zoom adjustment to operate, such as a camera platform on which the camera 110 is mounted. Specifically, the drive mechanism 112, under control from a drive control unit 117 of the computational processing device 114 discussed later, causes components such as the zoom lens in the optical system of the imaging unit 111 and the camera platform to operate, and thereby changes the pan, tilt, and zoom of the camera 110. The specific configuration of the drive mechanism 112 is not particularly limited, and any of various configurations used in a typical PTZ camera may be applied.

The memory 113 is a memory element that stores captured image data generated by the imaging unit 111. The memory 113 is able to temporarily store captured image data of a certain duration (a certain number of frames) used to conduct a tracking target estimation process by a tracking target estimation unit 118 of the computational processing device 114 discussed later, and a display image data generation process by the display image data generation unit 119. The memory 113 stores the above captured image data of a certain duration, including the most recent captured image data, while continuously updating the captured image data.

The computational processing device 114 is made up of a processor such as a central processing unit (CPU) or a digital signal processor (DSP), for example, and centrally controls the operation of the monitoring system 1 by executing a certain program. Functionally, the computational processing device 114 includes a tracking mode setting unit 115, an automatic tracking PTZ control value computation unit 116, a drive control unit 117, a tracking target estimation unit 118, and a display image data generation unit 119. As a result of the processor constituting the computational processing device 114 executing computational processing in accordance with a certain program, the above functions are realized.

The tracking mode setting unit 115 sets the tracking mode in the monitoring system 1 to either the manual tracking mode or the automatic tracking mode, according to an operator instruction input via the tracking mode switch input device 130. The tracking mode setting unit 115 provides information about the currently set tracking mode to the automatic tracking PTZ control value computation unit 116, the drive control unit 117, the tracking target estimation unit 118, and the display image data generation unit 119. In the automatic tracking PTZ control value computation unit 116, the drive control unit 117, the tracking target estimation unit 118, and the display image data generation unit 119, processes corresponding to the tracking mode set by the tracking mode setting unit 115 are executed respectively.

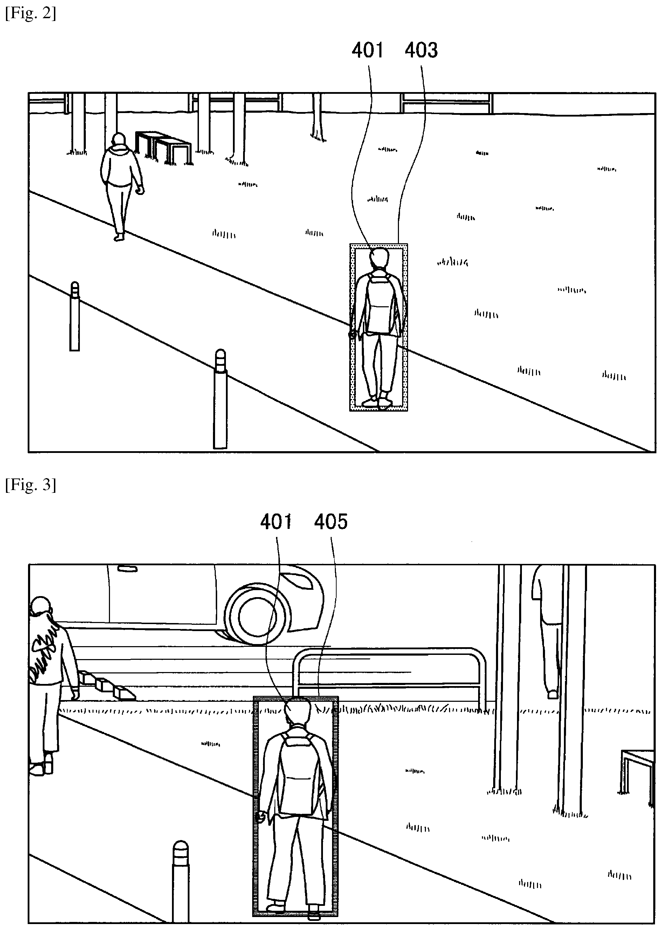

The automatic tracking PTZ control value computation unit 116 computes PTZ control values of the camera 110 for tracking a tracking target in the automatic tracking mode. Specifically, the automatic tracking PTZ control value computation unit 116 extracts a tracking target by image analysis, as well as information such as the movement direction and movement speed of the tracking target, from captured image data stored in the memory 113, and computes PTZ control values so that the tracking target is included in the field of view. Herein, in the present embodiment, the tracking target is specified as the tracking target estimated by the tracking target estimation unit 118 when the tracking mode is switched to the automatic tracking mode. The method of specifying the tracking target will be discussed later with reference to FIGS. 2 to 4. In the present embodiment, regarding the method of computing PTZ control values in the automatic tracking mode, any of various known types of methods used in a typical PTZ camera may be applied, and thus a detailed description of the processing content is omitted herein. The automatic tracking PTZ control value computation unit 116 provides information about the computed PTZ control values to the drive control unit 117.

The drive control unit 117 controls the driving of the drive mechanism 112, and changes the pan, tilt, and/or zoom of the camera 110 to track the tracking target. In the manual tracking mode, the drive control unit 117 causes the drive mechanism 112 to drive in accordance with PTZ control values corresponding to operator instructions input via the PTZ operation input device 140. On the other hand, in the automatic tracking mode, the drive control unit 117 causes the drive mechanism 112 to drive in accordance with PTZ control values computed by the automatic tracking PTZ control value computation unit 116.

While a tracking target is being tracked in accordance with operations by the operator in the manual tracking mode, the tracking target estimation unit 118 estimates the tracking target from the image of the monitoring target region captured by the camera 110, based on the captured image data stored in the memory 113. The specific method of estimating a tracking target by the tracking target estimation unit 118 is not limited, and any of various methods may be used. Details about a tracking target estimation process conducted by the tracking target estimation unit 118 will be described further in (4. Process of estimating tracking target) below. The tracking target estimation unit 118 provides information about the estimated tracking target (specifically, information about a region corresponding to the tracking target inside the monitoring region image) to the display image data generation unit 119. Also, if the tracking target estimation unit 118 ascertains, based on the information provided by the tracking mode setting unit 115, that the tracking mode has been switched from the manual tracking mode to the automatic tracking mode, the tracking target estimation unit 118 provides information about the tracking target estimated at that timing to the automatic tracking PTZ control value computation unit 116. The automatic tracking PTZ control value computation unit 116 treats the tracking target estimated when the tracking mode is switched from the manual tracking mode to the automatic tracking mode as the tracking target for the automatic tracking mode, and computes PTZ control values for automatic tracking.

The display image data generation unit 119 generates image data to be displayed on the display device 120. Specifically, in the automatic tracking mode, the display image data generation unit 119 generates display image data as image data in which a frame indicating the tracking target is overlaid onto the monitoring region image (hereinafter also referred to as a tracking target display frame), based on the captured image data stored in the memory 113. Note that the process of specifying a region corresponding to the tracking target inside the monitoring region image in the automatic tracking mode, and the process of overlaying a frame onto the specified region corresponding to the tracking target in the monitoring region image, are executable using any of various known methods, and thus a detailed description of the processing content is omitted herein. However, the present embodiment is not limited to such an example, and in the present embodiment, the tracking target display frame may not necessarily be displayed on the display image in the automatic tracking mode. In other words, in the automatic tracking mode, the display image data generation unit 119 may also treat the captured image data stored in the memory 113 directly as the display image data. Also, in cases in which the tracking target is no longer recognized inside the monitoring region image, such as when the tracking target is blocked by an obstruction, for example, the display image data generation unit 119 does not generate the tracking target display frame, and instead treats the captured image data directly as the display image data.

Specifically, in the manual tracking mode, the display image data generation unit 119 generates display image data as image data in which a frame indicating the estimated tracking target is overlaid onto the monitoring region image (hereinafter also referred to as a tracking target estimation frame), based on the captured image data stored in the memory 113, and the information about the tracking target estimated by the tracking target estimation unit 118. At this point, to enable the operator to visually distinguish between the tracking target display frame and the tracking target estimation frame, the display image data generation unit 119 generates the tracking target display frame and the tracking target estimation frame as frames having mutually different visual appearances. For example, the tracking target display frame and the tracking target estimation frame are generated to have mutually different colors and/or shapes or the like. However, the present embodiment is not limited to such an example, and in the present embodiment, the tracking target display frame and the tracking target estimation frame may also be generated to have the same visual appearance.

The display image data generation unit 119 transmits the generated display image data to the display device 120, and also controls the driving of the display device 120 to display an image based on the display image data on the display device 120. Consequently, in the automatic tracking mode, an image in which the tracking target display frame is overlaid onto the monitoring region image is displayed on the display device 120, whereas in the manual tracking mode, an image in which the tracking target estimation frame is overlaid onto the monitoring region image is displayed on the display device 120.

Herein, as above, in the present embodiment, the monitoring system 1 is configured so that when, in the manual tracking mode, the operator inputs an instruction to switch the tracking mode to the automatic tracking mode via the tracking mode switch input device 130, the person or object bounded by the tracking target estimation frame (in other words, the tracking target estimated by the tracking target estimation unit 118) is specified as the tracking target for the automatic tracking mode. According to such a configuration, by simply performing an operation of switching the tracking mode from the manual tracking mode to the automatic tracking mode, the operator is able to specify the tracking target for the automatic tracking mode at the same time. Additionally, the switching operation is executable with a one-action operation, such as pressing a button, for example. Consequently, the operator becomes able to specify a tracking target for the automatic tracking mode more easily, with a simpler operation.

The operation by the operator when tracking a tracking target using the monitoring system 1 will be described in detail with reference to FIGS. 2 to 4. FIGS. 2 to 4 are diagrams for explaining the operation by the operator when tracking a tracking target using the monitoring system 1. In FIGS. 2 to 4, images displayed on the display device 120 in the monitoring system 1 are illustrated diagrammatically.

At this point, suppose that in the manual tracking mode, the operator is conducting PTZ control of the camera 110 with operations performed via the PTZ operation input device 140, and is tracking a certain person 401. In this case, as illustrated in FIG. 2, on the display device 120, there is displayed an image in which a tracking target estimation frame 403 indicating the tracking target estimated by the tracking target estimation unit 118 is overlaid onto the person 401 in the monitoring region image.

In this state, if the person 401 who is being tracked is estimated appropriately as illustrated (in other words, if the tracking target estimation frame 403 is applied to the person 401 who is being tracked), the operator inputs an instruction to switch the tracking mode to the automatic tracking mode via the tracking mode switch input device 130. According to the input of this instruction, the tracking mode is switched to the automatic tracking mode, and in addition, the person 401 bounded by the tracking target estimation frame 403 is specified as the tracking target for the automatic tracking mode. Subsequently, PTZ control values of the camera 110 for automatic tracking mode are computed by the automatic tracking PTZ control value computation unit 116 using any of various known methods, and tracking of the person 401 is executed automatically in accordance with the PTZ control values.

While tracking the person 401 in the automatic tracking mode, an image in which the tracking target display frame 405 is overlaid onto the person 401 in the monitoring region image is displayed on the display device 120, as illustrated in FIG. 3. At this point, in the illustrated example, the tracking target estimation frame 403 illustrated in FIG. 2 and the tracking target display frame 405 illustrated in FIG. 3 are displayed as frames having mutually different colors. Consequently, the operator is able to visually and intuitively grasp the type of frame currently being displayed, and the current tracking mode.

Note that in the manual tracking mode, if the person 401 who is being tracked is not estimated appropriately (in other words, if the tracking target estimation frame 403 is not applied to the person 401 who is being tracked), the operator may simply continue tracking manually until the tracking target estimation frame 403 is displayed appropriately.

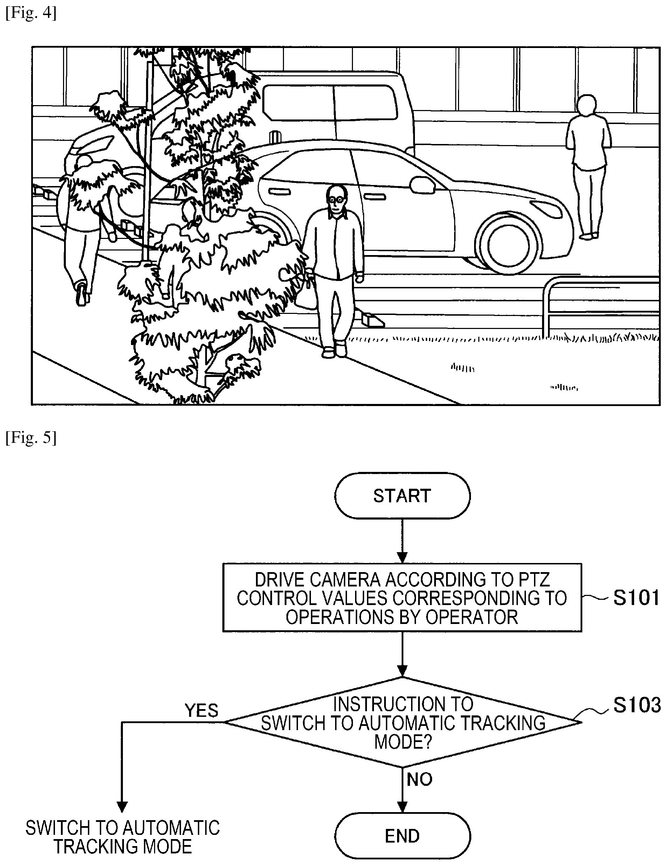

As illustrated in FIG. 4, while tracking the person 401 in the automatic tracking mode, if the person 401 becomes blocked by an obstruction such as a roadside tree, for example, and the computational processing device 114 becomes unable to recognize the person 401 inside the monitoring region image, the display of the tracking target display frame 405 disappears. In this case, the operator recognizes that automatic tracking has been lost due to the disappearance of the display of the tracking target display frame 405, and inputs an instruction to switch the tracking mode to the manual tracking mode via the tracking mode switch input device 130. Subsequently, in the manual tracking mode, the operator continues tracking the person 401 with the operator's own operations. Thereafter, the tracking of the person 401 is conducted by repeating the operations described above.

Hereinafter, a configuration of the monitoring system 1 will be described. As described above, in the present embodiment, in the manual tracking mode, the tracking target being tracked manually by the operator is estimated. In addition, a monitoring region image in which a tracking target estimation frame is overlaid onto the estimated tracking target is displayed to the operator. Subsequently, in the manual tracking mode, when the operator inputs an instruction to switch the tracking mode to the automatic tracking mode, the person or object bounded by the tracking target estimation frame is specified as the tracking target for the automatic tracking mode.

Herein, as described in (1. Background leading up to the present disclosure) above, with the typical existing technology, since the operation of specifying the tracking target for the automatic tracking mode is complicated, there is a risk of producing inexpediences, such as a large workload of the operator, an inability to specify the tracking target correctly, and a loss of the opportunity to capture the tracking target due to the time taken to specify the tracking target. In contrast, according to the monitoring system 1 according to the present embodiment, by including a configuration as above, the operator is able to specify the tracking target for the automatic tracking mode more accurately with a simple operation, thereby making it possible to switch seamlessly from the manual tracking mode to the automatic tracking mode. Thus, it becomes possible to improve operability for the operator, while also avoiding the loss of an opportunity to capture the tracking target due to the switching of the tracking mode.

### (3. Computational processing method)

A processing procedure of a computational processing method according to the present embodiment will now be described with reference to FIGS. 5 to 8. FIGS. 5 to 8 are flowcharts illustrating an example of a processing procedure of a computational processing method according to the present embodiment. Herein, each of the processes illustrated in FIGS. 5 to 8 corresponds to a process executed by the computational processing device 114 of the monitoring system 1 illustrated in FIG. 1 discussed earlier. Since the details of each of these processes already have been described when describing the functional configuration of the monitoring system 1, in the following description of the processing procedure of the computational processing method, detailed description of each of the processes may be reduced or omitted.

Hereinafter, the computational processing method in the respective cases of the manual tracking mode and the automatic tracking mode will be described in succession.

### (3-1. Manual tracking mode)

### (3-1-1. Computational processing method related to driving of camera)

FIG. 5 illustrates a processing procedure of a computational processing method related to the driving of the camera 110 in the manual tracking mode. Referring to FIG. 5, in the computational processing method related to the driving of the camera 110 in the manual tracking mode, first, the camera 110 is driven in accordance with PTZ control values corresponding to operations by the operator (step S101). In other words, the tracking target is tracked manually. The process indicated in step S101 corresponds to the process in which the drive control unit 117 illustrated in FIG. 1 causes the drive mechanism 112 to drive in accordance with PTZ control values corresponding to operator instructions input via the PTZ operation input device 140.

Next, it is determined whether or not an instruction to switch the tracking mode to the automatic tracking mode has been input (step S103). The process indicated in step S103 corresponds to the process executed by the tracking mode setting unit 115 illustrated in FIG. 1. When there is no input of an instruction, the tracking mode is not switched, and thus the series of processes ends, and the process in step S101 and thereafter is repeated in response to an instruction subsequently input from the operator.

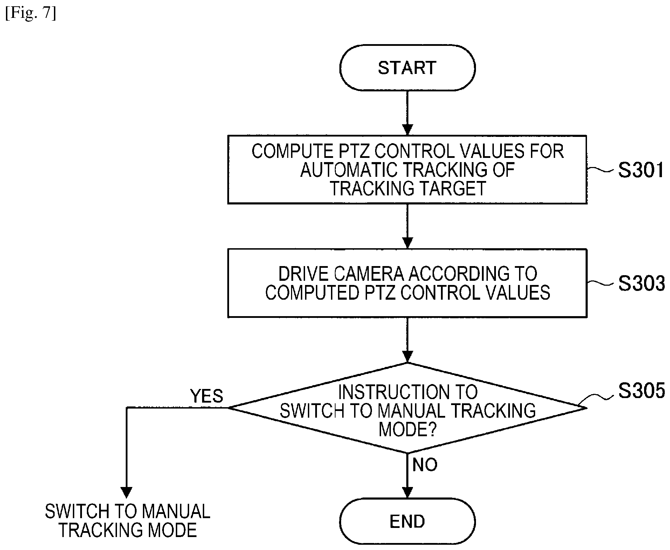

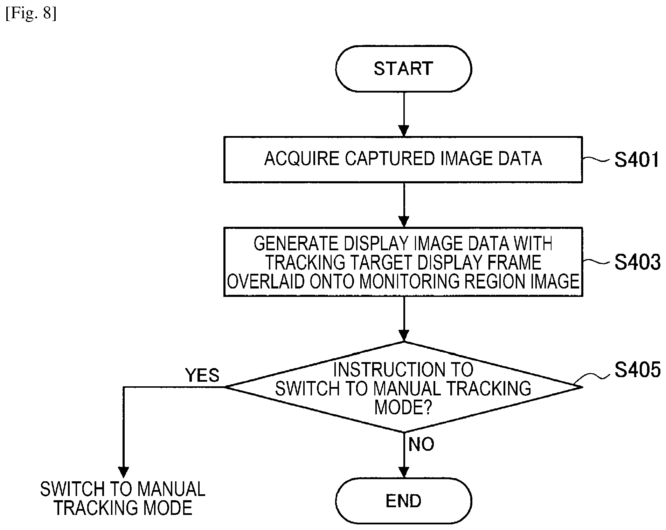

On the other hand, when there is input of an instruction to switch the tracking mode to the automatic tracking mode in step S103, the tracking mode is switched by the tracking mode setting unit 115 in accordance with the instruction, and proceeds to the automatic tracking mode. In the automatic tracking mode, the processes illustrated in FIGS. 7 and 8 discussed later are executed.

### (3-1-2. Computational processing method related to generation of display image data)

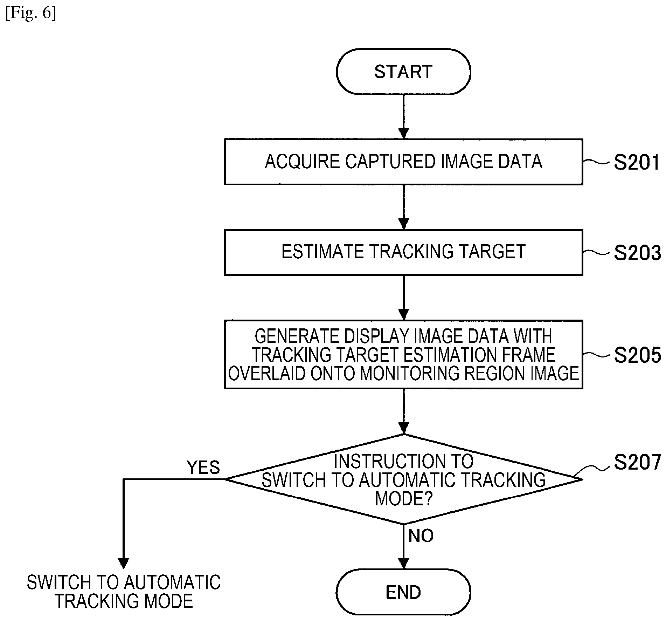

FIG. 6 illustrates a processing procedure of a computational processing method related to the generation of display image data in the manual tracking mode. Note that while the series of processes illustrated in FIG. 6 are being executed, the series of processes illustrated in FIG. 5 (that is, the manual tracking process) is being conducted continually. In addition, the series of processes illustrated in FIG. 6 corresponds to the process corresponding to one frame's worth of captured image data captured by the camera 110.

Referring to FIG. 6, in the computational processing method related to the generation of display image data in the manual tracking mode, first, the captured image data currently being tracked manually is acquired (step S201). The process indicated in step S201 corresponds to the process in which the tracking target estimation unit 118 and the display image data generation unit 119 acquire captured image data generated continually by the imaging unit 111 illustrated in FIG. 1 during manual tracking and stored in the memory 113.

Next, the tracking target is estimated, based on the captured image data acquired during manual tracking (step S203). The process indicated in step S203 corresponds to the process executed by the tracking target estimation unit 118 illustrated in FIG. 1.

Next, display image data in which a tracking target estimation frame is overlaid onto the monitoring region image is generated (step S205). The process indicated in step S205 corresponds to the process executed by the display image data generation unit 119 illustrated in FIG. 1.

Next, it is determined whether or not an instruction to switch the tracking mode to the automatic tracking mode has been input (step S207). The process indicated in step S207 corresponds to the process executed by the tracking mode setting unit 115 illustrated in FIG. 1. When there is no input of an instruction in step S207, the tracking mode is not switched, and thus the series of processes ends, and the process in step S201 and thereafter is repeated on the next frame.

On the other hand, when there is input of an instruction to switch the tracking mode to the automatic tracking mode in step S207, the tracking mode is switched by the tracking mode setting unit 115 in accordance with the instruction, and proceeds to the automatic tracking mode. In the automatic tracking mode, the processes illustrated in FIGS. 7 and 8 discussed later are executed.

### (3-2. Automatic tracking mode)

### (3-2-1. Computational processing method related to driving of camera)

FIG. 7 illustrates a processing procedure of a computational processing method related to the driving of the camera 110 in the automatic tracking mode. Referring to FIG. 7, in the computational processing method related to the driving of the camera 110 in the automatic tracking mode, first, PTZ control values for automatically tracking the tracking target are computed, based on captured image data (step S301). The process indicated in step S301 corresponds to the process executed by the automatic tracking PTZ control value computation unit 116 illustrated in FIG. 1.

Next, the camera 110 is driven in accordance with the computed PTZ control values (step S303). In other words, the tracking target is tracked automatically. The process indicated in step S303 corresponds to the process in which the drive control unit 117 illustrated in FIG. 1 causes the drive mechanism 112 to drive in accordance with PTZ control values computed by the automatic tracking PTZ control value computation unit 116.

Next, it is determined whether or not an instruction to switch the tracking mode to the manual tracking mode has been input (step S305). The process indicated in step S305 corresponds to the process executed by the tracking mode setting unit 115 illustrated in FIG. 1. When there is no input of an instruction, the tracking mode is not switched, and thus the series of processes ends, and the process in step S301 and thereafter is repeated at the next timing when PTZ control values are computed. Note that the interval on which PTZ control values are computed may be similar to the frame rate at which captured image data is generated, or may be an arbitrary interval slower than the frame rate.

On the other hand, when there is input of an instruction to switch the tracking mode to the manual tracking mode in step S305, the tracking mode is switched by the tracking mode setting unit 115 in accordance with the instruction, and proceeds to the manual tracking mode. In the manual tracking mode, the processes illustrated in FIGS. 5 and 6 discussed earlier are executed.

### (3-2-2. Computational processing method related to generation of display image data)

FIG. 8 illustrates a processing procedure of a computational processing method related to the generation of display image data in the automatic tracking mode. Note that while the series of processes illustrated in FIG. 8 are being executed, the series of processes illustrated in FIG. 7 (that is, the automatic tracking process) is being conducted continually. In addition, the series of processes illustrated in FIG. 8 corresponds to the process corresponding to one frame's worth of captured image data captured by the camera 110.

Referring to FIG. 8, in the computational processing method related to the generation of display image data in the automatic tracking mode, first, the captured image data currently being tracked automatically is acquired (step S401). The process indicated in step S401 corresponds to the display image data generation unit 119 acquiring captured image data generated continually by the imaging unit 111 illustrated in FIG. 1 during automatic tracking and stored in the memory 113.

Next, display image data in which the tracking target display frame is overlaid onto the monitoring region image is generated, based on the captured image data acquired during automatic tracking (step S403). The process indicated in step S403 corresponds to the process executed by the display image data generation unit 119 illustrated in FIG. 1.

Next, it is determined whether or not an instruction to switch the tracking mode to the manual tracking mode has been input (step S405). The process indicated in step S405 corresponds to the process executed by the tracking mode setting unit 115 illustrated in FIG. 1. When there is no input of an instruction in step S405, the tracking mode is not switched, and thus the series of processes ends, and the process in step S401 and thereafter is repeated on the next frame.

On the other hand, when there is input of an instruction to switch the tracking mode to the manual tracking mode in step S407, the tracking mode is switched by the tracking mode setting unit 115 in accordance with the instruction, and proceeds to the manual tracking mode. In the manual tracking mode, the processes illustrated in FIGS. 5 and 6 discussed earlier are executed.

The above thus describes a processing procedure of a computational processing method according to the present embodiment.

### (4. Process of estimating tracking target)

The details of the process of estimating the tracking target conducted by the tracking target estimation unit 118 illustrated in FIG. 1 will now be described. In the present embodiment, the tracking target estimation unit 118 is able to estimate the tracking target during manual tracking according to any of the following methods.

### (4-1. Process of estimating tracking target by color)

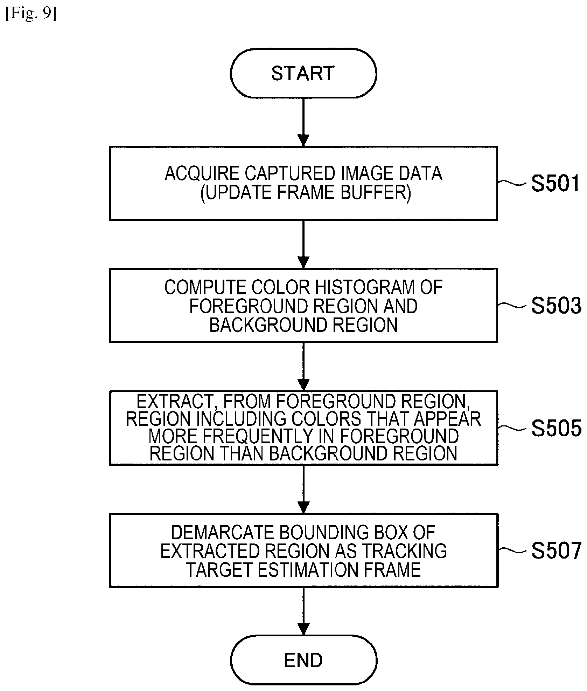

In the monitoring region image, the tracking target estimation unit 118 is able to estimate a region among the foreground region where the color is different from the surroundings as a region in which a tracking target exists. FIG. 9 is a flowchart illustrating a processing procedure of one example of such a process for estimating a tracking target, namely, a process for estimating a tracking target using color. Note that in the process of estimating a tracking target illustrated in FIG. 9, a tracking target is estimated under the following two presuppositions: during manual tracking, the tracking target continues to exist in the approximate center of the field of view, and the tracking target has different colors from the surrounding background.

Referring to FIG. 9, in the process of estimating a tracking target using color, first, captured image data is acquired, and buffered captured image data for a certain number of frames (that is, a frame buffer) is updated to the most recent data (step S501). The process indicated in step S501 corresponds to the process in which the tracking target estimation unit 118 acquires captured image data generated continually by the imaging unit 111 illustrated in FIG. 1 during manual tracking and stored in the memory 113, and updates the frame buffer.

Next, a color histogram of the foreground region and the background region is computed (step S503). For the specific process of computing the color histogram, any of various known methods may be used. Herein, the foreground region is preset as a region of a certain range from the center of the field of view. Also, the background region is preset as a region of a certain range surrounding the foreground region. The setting of the foreground region and the background region is based on the above presupposition that the tracking target continues to exist in the approximate center of the field of view.

Next, based on the computed color histogram, a region including colors that appear more frequently in the foreground region than the background region is extracted from the foreground region (step S505). Subsequently, a bounding box of the extracted region is demarcated as the tracking target estimation frame (step S507). These processes are based on the above presupposition that the tracking target has different colors from the surrounding background.

### (4-2. Process of estimating tracking target by detection of moving object)

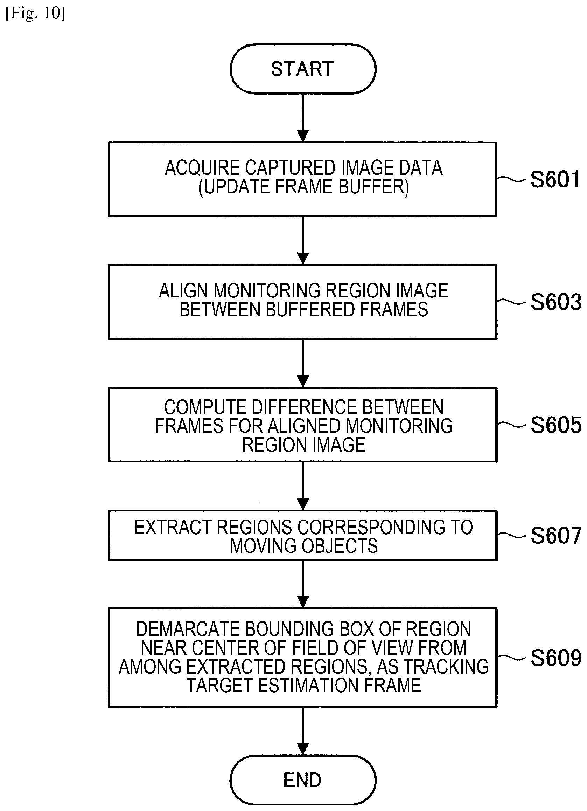

The tracking target estimation unit 118 is able to estimate a moving object detected inside the monitoring region image as the tracking target. FIG. 10 is a flowchart illustrating a processing procedure of one example of such a process for estimating a tracking target, namely, a process for estimating a tracking target by detection of a moving object. Note that in the process of estimating a tracking target illustrated in FIG. 10, a tracking target is estimated under the presupposition that during manual tracking, the tracking target continues to exist in the approximate center of the field of view.

Referring to FIG. 10, in the process of estimating a tracking target by detection of a moving object, first, captured image data is acquired, and buffered captured image data for a certain number of frames (that is, a frame buffer) is updated to the most recent data (step S601). The process indicated in step S601 corresponds to the process in which the tracking target estimation unit 118 acquires captured image data generated continually by the imaging unit 111 illustrated in FIG. 1 during manual tracking and stored in the memory 113, and updates the frame buffer.

Next, alignment of the monitoring region image between the buffered frames is conducted (step S603).

Next, differences between frames are computed for the aligned monitoring region image (step S605).

Next, based on the computed differences between frames, a region corresponding to a moving object is extracted (step S607).

Subsequently, a bounding box of a region existing near the center of the field of view from among the extracted region is demarcated as the tracking target estimation frame (step S609). This process is based on the above presupposition that the tracking target continues to exist in the approximate center of the field of view.

### (4-3. Other processes of estimating tracking target)

Besides the above, the tracking target estimation unit 118 may also estimate a tracking target by the methods described below.

For example, the tracking target estimation unit 118 may also combine an image recognition process with the estimation process described above. For example, visual characteristics of the tracking target (such as the face, clothing, and physique if the target is a person, for example) may be set in advance. The tracking target estimation unit 118 conducts an image recognition process on captured image data, and thereby extracts from the monitoring region image persons or objects conforming to the set characteristics as tracking target candidates. Subsequently, from among the extracted tracking target candidates, the final tracking target is extracted based on color or a moving object detection result according to the methods discussed above. According to this method, regions other than a person or object having characteristics of appearance set in advance are not estimated as the tracking target, thereby making it possible to further improve the accuracy of the process of estimating the tracking target.

As an alternative example, the tracking target estimation unit 118 may estimate a tracking target by additionally considering the "quirks" of the operator. For example, operators may be managed by IDs, enabling the monitoring system 1 to individually recognize the operator currently performing manual tracking. Also, the tendencies of operation for each operator during manual tracking are stored in a database. The database of the tendencies of operation may include, for example, information about the size, position, and the like of the tracking target in the field of view when being tracked manually by each operator. Subsequently, when executing the process of estimating the tracking target, the tracking target estimation unit 118 recognizes by ID the operator currently performing manual tracking and also accesses the above database, and thereby ascertains the tendencies of operation for that operator. Subsequently, the process of estimating the tracking target using color or the process of estimating the tracking target by detection of a moving object discussed earlier is executed, with additional consideration of the ascertained tendencies of operator for the operator.

For example, in the process of estimating the tracking target using color or the process of estimating the tracking target by detection of a moving object described earlier, the estimation process is conducted under the presupposition that the tracking target exists in the approximate center of the field of view, but if it is ascertained via the database that the operator who is currently performing manual tracking has a strong tendency of capturing the tracking target at a position comparatively offset to the left from the center of the field of view, at a size approximately 1/4 of the field of view, the tracking target estimation unit 118 estimates the tracking target based on color or a moving object detection result under the presupposition that the tracking target is at a position comparatively offset to the left from the center of the field of view, at the size described above. According to this method, the tracking target may be estimated while also accounting for the "quirks" of operation for each operator, thereby making it possible to further improve the accuracy of the process of estimating the tracking target.

Alternatively, as a method other than the process of estimating the tracking target using color and the process of estimating the tracking target by detection of a moving object discussed earlier, the tracking target estimation unit 118 may also estimate the tracking target based on a relationship between the apparent movement speed of the image in the display image data (in other words, the apparent movement speed of the image displayed on the display device 120) and the movement speed of a person or object inside the monitoring region image. Specifically, while tracking is being performed manually, in many cases pan, tilt, and/or zoom operations are performed so that the tracking target is displayed at an approximately fixed position inside the image displayed on the display device 120. For this reason, the apparent movement speed of the image in the display image data and the movement speed of a moving object taken to be the tracking target may be considered approximately equal. Consequently, the tracking target estimation unit 118 may extract from the monitoring region image a person or object that is moving approximately equal to the apparent movement speed of the image in the display image data (in other words, a person or object that continues to exist in an approximately fixed location inside the image displayed on the display device 120), and estimate the extracted person or object as the tracking target.

At this point, cases may occur in which, as a result of any of the above estimation methods, multiple tracking target candidates inside the monitoring region image are estimated, such as cases in which multiple moving objects exist near the center of the field of view, for example. In such a case, the tracking target estimation unit 118 evaluates the likelihoods of these tracking target candidates according to an appropriate evaluation function, chooses just the most appropriate one from among these candidates, and estimates the chosen candidate as the final tracking target. For example, from among multiple extracted tracking target candidates, the tracking target estimation unit 118 estimates the one closest to the center of the field of view as the final tracking target. In this way, by having the tracking target estimation unit 118 choose just one final tracking target, just one tracking target estimation frame is also displayed to the operator. Consequently, it becomes possible to specify the tracking target in one action as discussed earlier, and an improvement in operability for the operator may be realized. If the estimation by the tracking target estimation unit 118 happens to be incorrect, and the tracking target estimation frame is not displayed on the operator's desired person or object, it is sufficient for the operator to continue manual tracking without switching the tracking mode until the tracking target estimation frame is displayed appropriately, as discussed earlier.

However, the present embodiment is not limited to such an example, and if the tracking target estimation unit 118 estimates multiple tracking target candidates, the display image data generation unit 119 correspondingly may also overlay multiple tracking target estimation frames onto the monitoring region image. In this case, in the monitoring system 1, a GUI may be provided to enable the operator to select one from among these multiple tracking target estimation frames, and specify the tracking target for the automatic tracking mode. According to such a GUI, to the extent that an operation of selecting one from among multiple tracking target estimation frames is demanded, the burden of operation on the operator related to specifying the tracking target increases compared to the above one-action operation, but since the work of continuing manual tracking until the tracking target estimation frame is displayed appropriately as discussed above is no longer necessary, there is a possibility of shortening the time of executing tracking in the manual tracking mode, and there is a possibility of relatively reducing the workload of the operator. Whether to display just one or multiple tracking target estimation frames may be set appropriately according to factors such as the characteristics of the operator (such as personality, preference, or skill, for example), and the environment of the monitoring target region.

In addition, the respective methods described above may also be used jointly. For example, the tracking target estimation unit 118 may execute the respective methods described above in parallel, and estimate a respective tracking target according to each method. In this case, multiple tracking targets may be estimated according to the respective methods, but as above, the tracking target estimation unit 118 may use an appropriate evaluation function to select only the most likely tracking target from among the multiple estimated tracking targets, or tracking target estimation frames may be displayed on all of the multiple estimated tracking targets.

### (5. Modifications)

Several modifications of the embodiment described above will now be described.

### (5-1. Modification with different device configuration)

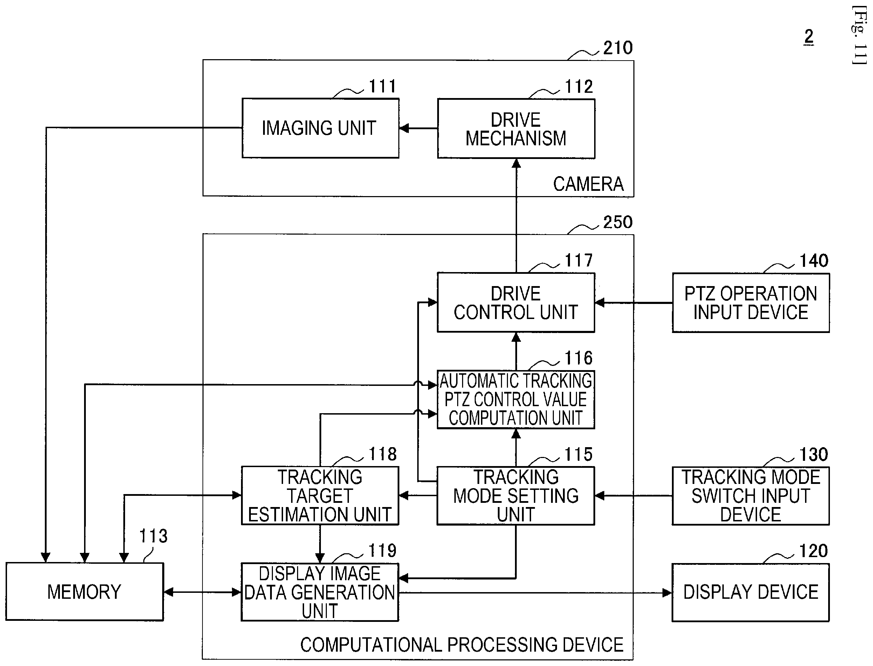

Referring to FIG. 11, a modification of the present embodiment, namely a modification in which the monitoring system has a different device configuration, will be described. FIG. 11 is a block diagram illustrating a schematic configuration of a monitoring system according to a modification in which the device configuration is different.

Referring to FIG. 11, the monitoring system 2 according to the present modification is provided with a camera 210, a display device 120, a tracking mode switch input device 130, a PTZ operation input device 140, memory 113, and a computational processing device 250. Herein, the display device 120, the tracking mode switch input device 130, the PTZ operation input device 140, and the memory 113 have a similar configuration and function as those illustrated in FIG. 1.

The camera 210 is a PTZ camera, enabling PTZ control according to manual operations by the operator, or automatically. The camera 210 includes an imaging unit 111 and a drive mechanism 112. The imaging unit 111 and the drive mechanism 112 have a similar configuration and function as those illustrated in FIG. 1.

The computational processing device 250 is made up of a processor such as a CPU or a DSP, for example, and centrally controls the operation of the monitoring system 2 by executing a certain program. Functionally, the computational processing device 250 includes a tracking mode setting unit 115, an automatic tracking PTZ control value computation unit 116, a drive control unit 117, a tracking target estimation unit 118, and a display image data generation unit 119. As a result of the processor constituting the computational processing device 250 executing computational processing in accordance with a certain program, the above functions are realized. Note that the computational processing device 250 has a similar configuration and function as the computational processing device 114 illustrated in FIG. 1.

In the monitoring system 2, among these devices, the camera 210 is installed in a location where the monitoring region may be captured, while the display device 120, the tracking mode switch input device 130, the PTZ operation input device 140, the memory 113, and the computational processing device 250 are installed in a location where the operator performs monitoring work. In other words, the camera 210 and the other devices are installed in separate locations from each other, and are communicably connected to each other via a network.

In this way, in the monitoring system 1 according to the embodiment discussed earlier, the memory 113 and the computational processing device 114 are equipped in the camera 110, but in the monitoring system 2 according to the present modification, the memory 113 and the computational processing device 114 are installed on the operator side. In the present embodiment, the monitoring system 2 may also be configured with the memory 113 and the computational processing device 114 installed on the operator side, like in the present modification. Note that in the monitoring system 2, items other than the installation location of the memory 113 and the computational processing device 114 are similar to the monitoring system 1, and thus a detailed description of each device is omitted.

### (5-2. Modification provided with electronic PTZ camera)

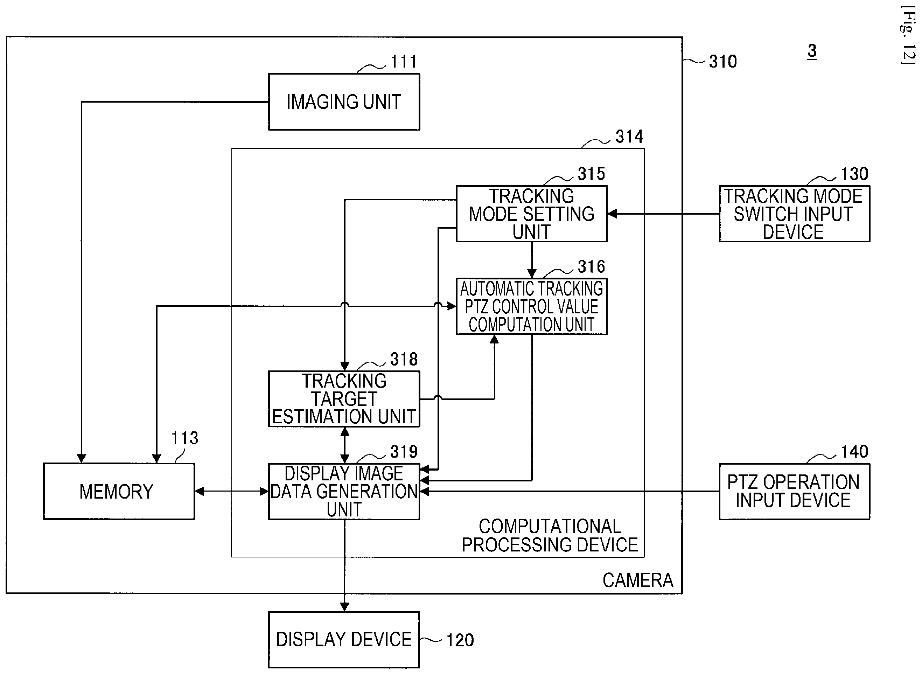

Referring to FIG. 12, another modification of the present embodiment, namely a modification in which the monitoring system is provided with an electronic PTZ camera, will be described. FIG. 12 is a block diagram illustrating a schematic configuration of a monitoring system according to a modification provided with an electronic PTZ camera.

Referring to FIG. 12, the monitoring system 3 according to the present embodiment is provided with a camera 310, a display device 120, a tracking mode switch input device 130, and a PTZ operation input device 140. Herein, the display device 120, the tracking mode switch input device 130, and the PTZ operation input device 140 have a similar configuration and function as those illustrated in FIG. 1.

The camera 310 is a PTZ camera, enabling PTZ control according to manual operations by the operator, or automatically. The camera 310 includes an imaging unit 111, memory 113, and a computational processing device 314. The imaging unit 111 and the memory 113 have a similar configuration and function as those illustrated in FIG. 1.

Herein, in the camera 310 according to the present modification, when conducting PTZ control, changes to the pan, tilt, and/or zoom are realized not by driving hardware (such as the zoom lens or camera platform in the case of the embodiment discussed earlier) with a drive mechanism, but instead by performing image processing on acquired captured image data. A PTZ camera capable of executing such software-based PTZ control is also called an electronic PTZ camera in this specification.

Specifically, in the present modification, the imaging unit 111 of the camera 310 is configured to be able to capture a wide-angle image at a comparatively high resolution. Subsequently, by cutting out and suitably enlarging a portion of the field of view from the captured image data generated by the imaging unit 111, display image data with a changed pan, tilt, and/or zoom is generated. For example, in the case of panning right, a section shifted to the right from the center of the field of view by an amount corresponding to a pan-related control value is cut out and suitably enlarged to fit the display screen, and display image data is thus generated. By configuring the imaging unit 111 to be able to capture a comparatively high-resolution image, even if such a cutout process is conducted, the image quality of the display image data is not degraded significantly.

In this way, as a result of the camera 310 being configured as an electronic PTZ camera, the camera 310 is not provided with a drive mechanism, unlike the embodiment discussed earlier. In addition, correspondingly, the functions of the computational processing device 314 are also different from the embodiment discussed earlier.

The functions of the computational processing device 314 will be described in detail. The computational processing device 314 is made up of a processor such as a CPU or a DSP, for example, and centrally controls the operation of the monitoring system 3 by executing a certain program. Functionally, the computational processing device 314 includes a tracking mode setting unit 315, an automatic tracking PTZ control value computation unit 316, a tracking target estimation unit 318, and a display image data generation unit 319. As a result of the processor constituting the computational processing device 314 executing computational processing in accordance with a certain program, the above functions are realized.

The functions of the tracking mode setting unit 315 are similar to the tracking mode setting unit 115 illustrated in FIG. 1. However, in the present modification, since the drive control unit 117 is not provided, unlike the embodiment discussed earlier, the tracking mode setting unit 315 provides information about the currently set tracking mode to the automatic tracking PTZ control value computation unit 316, the tracking target estimation unit 318, and the display image data generation unit 319.

The automatic tracking PTZ control value computation unit 316 corresponds to the automatic tracking PTZ control value computation unit 116 illustrated in FIG. 1. The automatic tracking PTZ control value computation unit 316 computes PTZ control values for tracking a tracking target in the automatic tracking mode. The method of computing PTZ control values is similar to the embodiment discussed earlier. At this point, in the embodiment discussed earlier, the automatic tracking PTZ control value computation unit 116 provides information about the computed PTZ control values to the drive control unit 117, but in the present modification, drive control of the camera 310 according to PTZ control is not conducted, and instead PTZ control is conducted by image processing as above. Consequently, in the present modification, the automatic tracking PTZ control value computation unit 316 provides information about the computed PTZ control values to the display image data generation unit 319.

The tracking target estimation unit 318 corresponds to the tracking target estimation unit 118 illustrated in FIG. 1. While a tracking target is being tracked in accordance with operations by the operator in the manual tracking mode, the tracking target estimation unit 318 estimates the tracking target. The specific method of the tracking target estimation process is similar to the embodiment discussed earlier. At this point, in the embodiment discussed earlier, the tracking target estimation unit 118 estimates the tracking target based on captured image data stored in the memory 113, but in the present modification, PTZ control is conducted by image processing as above. For this reason, while performing manual tracking, the captured image data changes very little (that is, an image with a fixed field of view is captured continually), and an image in which the tracking target is being tracked in the display image data is obtained. Consequently, in the present modification, the tracking target estimation unit 318 estimates the tracking target based on the display image data generated by the display image data generation unit 319 while tracking manually. The tracking target estimation unit 318 provides information about the estimated tracking target to the display image data generation unit 319.

The display image data generation unit 319 corresponds to the display image data generation unit 119 illustrated in FIG. 1. The display image data generation unit 319 generates image data to be displayed on the display device 120. Specifically, in the automatic tracking mode, based on captured image data stored in the memory 113, and information about PTZ control values computed by the automatic tracking PTZ control value computation unit 316, the display image data generation unit 319 cuts out and enlarges a certain region inside the monitoring region image in accordance with the PTZ control values, and in addition, generates display image data as image data in which the tracking target display frame is overlaid onto the enlarged region.

In addition, in the manual tracking mode, an instruction related to PTZ control is input into the display image data generation unit 319 by the operator via the PTZ operation input device 140. Subsequently, in the manual tracking mode, based on captured image data stored in the memory 113, information about the tracking target estimated by the tracking target estimation unit 118, and the instruction related to PTZ control input by the operator via the PTZ operation input device 140, the display image data generation unit 319 cuts out and enlarges a certain region inside the monitoring region image in accordance with PTZ control values corresponding to the instruction related to PTZ control, and in addition, generates display image data as image data in which the tracking target estimation frame is overlaid onto the enlarged region.

As described above, in the present embodiment, a monitoring system 3 provided with an electronic PTZ camera may also be configured. Note that in the example configuration illustrated in FIG. 12, the computational processing device 314 is provided inside the camera 310, but similarly to the modification described in (5-1. Modification with different device configuration) above, the monitoring system 3 may also be configured so that the computational processing device 314 is provided on the operator side as a separate device from the camera 310.

### (5-3. Modification provided with drone)

Another modification of the present embodiment, namely a modification in which the monitoring system is provided with a drone, will be described. Recently, drones are being equipped with a function of automatically tracking a tracking target using an imaging unit mounted on the drone. However, when switching the tracking mode from a manual tracking mode to an automatic tracking mode in a drone, the operator may be required to perform the operation of specifying the tracking target and the operation of switching the tracking mode, while also operating the drone. Consequently, if these operations are not performed simply and easily, the operator is demanded to perform complicated work, which may lead to operating mistakes.

On the other hand, as described above, according to the technology according to the present embodiment, when switching from the manual tracking mode to the automatic tracking mode, it is possible to execute the operation of specifying the tracking target and the operation of switching the tracking mode easily in one action. Consequently, by applying the technology according to the present embodiment to a monitoring system provided with a drone, operability for the operator may be improved greatly.

### (5-3-1. Configuration of monitoring system)

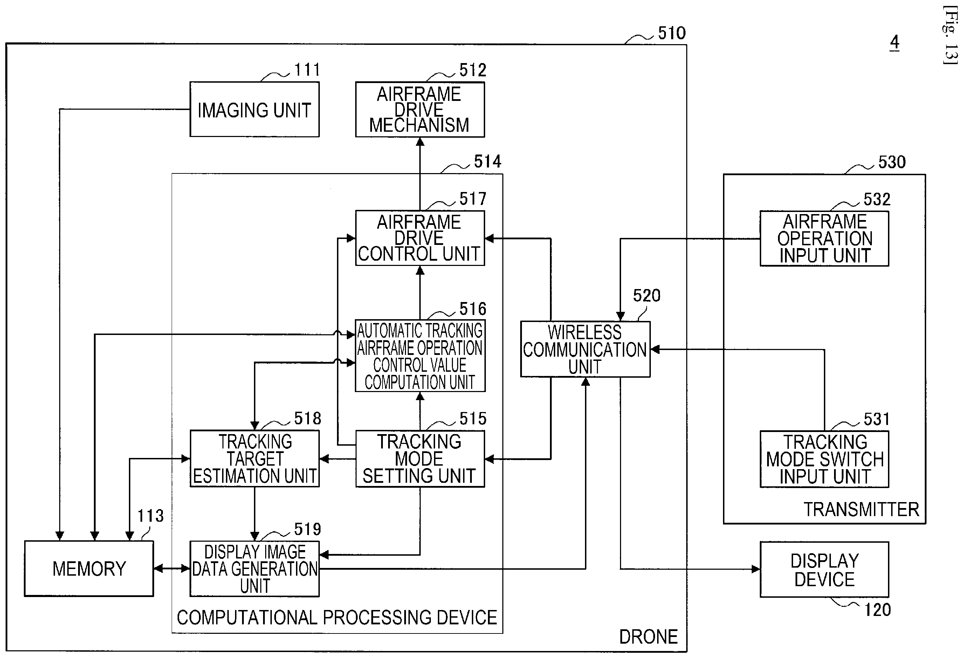

Referring to FIG. 13, another modification of the present embodiment, namely a modification in which the monitoring system is provided with a drone, will be described. FIG. 13 is a block diagram illustrating a schematic configuration of a monitoring system according to a modification provided with a drone.

Referring to FIG. 13, the monitoring system 4 according to the present modification is provided with a drone 510, a display device 120, and a transmitter 530. Herein, the display device 120 has a similar configuration and function as that illustrated in FIG. 1. Note that in the exemplary configuration illustrated in the drawing, the display device 120 and the transmitter 530 are disposed as separate devices, but the display device 120 may also be integrated with the transmitter 530.

The transmitter 530 is an input device for inputting various instructions for operating the drone 510. The various instructions input into the transmitter 530 are transmitted to the drone 510 by wireless communication. Functionally, the transmitter 530 includes a tracking mode switch input unit 531 and an airframe operation input unit 532.

The tracking mode switch input unit 531 includes functions similar to the tracking mode switch input device 130 illustrated in FIG. 1. The operator is able to input an instruction to switch the tracking mode to the manual tracking mode or the automatic tracking mode into the drone 510 via the tracking mode switch input unit 531. The tracking mode switch input unit 531 is made up an input device enabling the input of such a switch instruction in one action, such as a button, for example.

The airframe operation input unit 532 includes a function of inputting into the drone 510 an instruction causing the drone 510 to operate. The airframe operation input unit 532 is made up of an input device such as a joystick, for example. However, the device configuration of the airframe operation input unit 532 is not limited to such an example, and the airframe operation input unit 532 may also be made up of an input device used to input instructions for drone operation in a typical drone transmitter. Via the airframe operation input unit 532, the operator is able to input instructions causing the drone 510 to move (such as ascending, descending, going forward, going backward, and turning). Also, if the imaging unit 111 discussed later is movably attached to the airframe of the drone 510 via a gimbal structure or the like, the operator may also input, via the airframe operation input unit 532, instructions causing the imaging unit 111 to move with respect to the airframe. In this specification, the above operations causing the drone 510 to move, and the operations causing the imaging unit 111 to move via a gimbal structure or the like, are collectively designated "airframe operations".

Herein, in the monitoring system 4, a tracking target is tracked by the imaging unit 111 mounted on the drone 510. At this point, control of the pan, tilt, and/or zoom of the imaging unit 111 is realized by causing the airframe of the drone 510 to move. For example, pan is realized by causing the airframe of the drone 510 to rotate around the vertical direction as the rotational axis direction (yawing). As another example, tilt is realized by causing the airframe of the drone 510 to rotate around the left-and-right direction as the rotational axis direction (pitching). As another example, zoom is realized by causing the airframe of the drone 510 to go forward or go backward. Note that if the imaging unit 111 is movably attached to the airframe of the drone 510 via a gimbal structure or the like, pan and tilt may be realized by causing the imaging unit 111 to move via the gimbal structure instead of, or in addition to, causing the entire airframe of the drone 510 to move.

Consequently, in the manual tracking mode, by having the airframe of the drone 510 operate in accordance with an operator's instruction input given via the airframe operation input unit 532, the pan, tilt, and/or zoom of the imaging unit 111 are controlled, and the tracking target is tracked.

The drone 510 includes the imaging unit 111, an airframe drive mechanism 512, memory 113, a computational processing device 514, and a wireless communication unit 520. In the present modification, a tracking target is tracked by the imaging unit 111 mounted on the drone 510.

The imaging unit 111 and the memory 113 have a similar configuration and function as those illustrated in FIG. 1. Note that in the present modification, the imaging unit 111 is affixed to the airframe of the drone 510, or movably attached via a gimbal structure.

The wireless communication unit 520 is made up of components such as an antenna that transmits and receives signals, and a processing circuit that processes transmitted and received signals. The wireless communication unit 520 receives instructions about switching the tracking mode and instructions about the operation of the airframe of the drone 510 transmitted from the transmitter 530, and provides these instructions to the computational processing device 514. Additionally, the wireless communication unit 520 transmits display image data generated by the computational processing device 514 to the display device 120. In this way, in the present modification, the transmitter 530 is at least configured to be capable of wireless transmission, while the display device 120 is at least configured to be capable of wireless reception.

The airframe drive mechanism 512 is a drive mechanism that causes the airframe of the drone 510 to operate. For example, the airframe drive mechanism 512 may be a motor for causing a propeller for movement of the drone 510 to rotate. Also, if the imaging unit 111 is movably attached to the airframe of the drone 510 via a gimbal structure or the like, the airframe drive mechanism 512 may also include a motor for causing the imaging unit 111 to move via the gimbal structure or the like.

The computational processing device 514 is made up of a processor such as a CPU or a DSP, for example, and centrally controls the operation of the monitoring system 4 by executing a certain program. Functionally, the computational processing device 514 includes a tracking mode setting unit 515, an automatic tracking airframe operation control value computation unit 516, an airframe drive control unit 517, a tracking target estimation unit 518, and a display image data generation unit 519. As a result of the processor constituting the computational processing device 514 executing computational processing in accordance with a certain program, the above functions are realized.

The function of the tracking mode setting unit 515 is mostly similar to the tracking mode setting unit 115 illustrated in FIG. 1. The tracking mode setting unit 515 sets the tracking mode to the manual tracking mode or the automatic tracking mode, in accordance with a instruction about the switching of the tracking mode provided via the wireless communication unit 520. The tracking mode setting unit 515 provides information about the currently set tracking mode to the automatic tracking airframe operation control value computation unit 516, the tracking target estimation unit 518, and the display image data generation unit 519.

The automatic tracking airframe operation control value computation unit 516 corresponds to the automatic tracking PTZ control value computation unit 116 illustrated in FIG. 1. Herein, in the monitoring system 4, as discussed earlier, by causing the airframe of the drone 510 to operate, the pan, tilt, and/or zoom of the imaging unit 111 are controlled, and the tracking target is tracked. Consequently, in the monitoring system 4, in the automatic tracking mode, the automatic tracking airframe operation control value computation unit 516 computes control values for controlling the operation of the airframe of the drone 510 (hereinafter also called airframe operation control values) as control values related to pan, tilt, and/or zoom for tracking the tracking target. In other words, the airframe operation control values according to the present modification correspond to the PTZ control values in the foregoing embodiment. For example, the automatic tracking airframe operation control value computation unit 516 computes such airframe operation control values by analyzing captured image data stored in the memory 113. Note that since any of various known methods used in a typical drone may be applied as the method of computing airframe operation control values to realize automatic tracking, a detailed description of the processing content is omitted herein.

The automatic tracking airframe operation control value computation unit 516 provides information about the computed airframe operation control values to the airframe drive control unit 517.

The airframe drive control unit 517 corresponds to the drive control unit 117 illustrated in FIG. 1. In the present modification, the airframe drive control unit 517 controls the driving of the airframe drive mechanism 512 to thereby control the pan, tilt, and/or zoom of the imaging unit 111, and cause the airframe of the drone 510 to track the tracking target. In the manual tracking mode, the airframe drive control unit 517 causes the airframe drive mechanism 512 to drive in accordance with airframe operation control values corresponding to operator instructions input via the airframe operation input unit 532. On the other hand, in the automatic tracking mode, the airframe drive control unit 517 causes the airframe drive mechanism 512 to drive in accordance with airframe operation control values computed by the automatic tracking airframe operation control value computation unit 516.

The function of the tracking target estimation unit 518 is similar to the tracking target estimation unit 118 illustrated in FIG. 1. While a tracking target is being tracked in accordance with instructions by the operator in the manual tracking mode, the tracking target estimation unit 518 estimates the tracking target. The specific method of the tracking target estimation process is similar to the embodiment discussed earlier. The tracking target estimation unit 518 provides information about the estimated tracking target to the display image data generation unit 519. Also, if the tracking target estimation unit 118 ascertains, based on the information provided by the tracking mode setting unit 515, that the tracking mode has been switched from the manual tracking mode to the automatic tracking mode, the tracking target estimation unit 118 provides information about the tracking target estimated at that timing to the automatic tracking airframe operation control value computation unit 516. The automatic tracking airframe operation control value computation unit 516 treats the tracking target estimated when the tracking mode is switched from the manual tracking mode to the automatic tracking mode as the tracking target in the automatic tracking mode, and computes airframe operation control values for automatic tracking.

The function of the display image data generation unit 519 is similar to the display image data generation unit 119 illustrated in FIG. 1. In the automatic tracking mode, the display image data generation unit 519 generates display image data as image data in which the tracking target display frame is overlaid onto the monitoring region image, based on the captured image data stored in the memory 113. However, similarly to the foregoing embodiment, in the present modification, the tracking target display frame may not necessarily be displayed on the display image in the automatic tracking mode. On the other hand, in the manual tracking mode, the display image data generation unit 519 generates display image data as image data in which the tracking target estimation frame is overlaid onto the monitoring region image, based on the captured image data stored in the memory 113, and the information about the tracking target estimated by the tracking target estimation unit 518.

The above thus describes a configuration of the monitoring system 4 according to a modification provided with the drone 510. As described above, according to the present modification, when tracking a tracking target using the drone 510, the operator is able to input an instruction to switch from the manual tracking mode to the automatic tracking mode by an operation in one action via the tracking mode switch input unit 531. At this point, since the tracking target with the attached tracking target estimation frame when the switch instruction is input is specified as the tracking target in the automatic tracking mode, the operator does not have to perform a separate operation of specifying the tracking target. Consequently, the operator becomes able to execute the switch from the manual tracking mode to the automatic tracking mode more easily and with a simple operation, even while also operating the drone 510. Thus, tracking the tracking target may be executed more smoothly without leading to operating mistakes or the like, and usability for the operator is improved.

Herein, in the example configuration described above, control of the pan, tilt, and/or zoom of the imaging unit 111 is realized by causing the airframe of the drone 510 to move, but the configuration of a monitoring system provided with the drone 510 is not limited to such an example. For example, if the pan, tilt, and/or zoom of the imaging unit 111 is executable independently of the operation of the airframe of the drone 510, a monitoring system similar to the monitoring system described up to (5-2. Modification provided with electronic PTZ camera) above, except with the imaging unit 111 provided on the drone 510, may be configured as the monitoring system provided with the drone 510. Alternatively, part of the pan, tilt, and/or zoom may be realized by the operation of the airframe of the drone 510, while the rest may be realized by the operation of the imaging unit 111. In this case, the monitoring system may be realized by a system including at least the drive mechanism 112, the automatic tracking PTZ control value computation unit 116, and the drive control unit 117 illustrated in FIG. 1, as well as the airframe drive mechanism 512, the automatic tracking airframe operation control value computation unit 516, and the airframe drive control unit 517 illustrated in FIG. 13. Specifically, in such a monitoring system, that which is realized by the operation of the airframe of the drone 510 from among the pan, tilt, and/or zoom may be controlled by the configuration and function of the airframe drive mechanism 512, the automatic tracking airframe operation control value computation unit 516, and the airframe drive control unit 517 illustrated in FIG. 13. Also, in such a monitoring system, that which is realized by the operation of the imaging unit 111 from among the pan, tilt, and/or zoom may be controlled by the configuration and function of the drive mechanism 112, the automatic tracking PTZ control value computation unit 116, and the drive control unit 117 illustrated in FIG. 1. Obviously, such a monitoring system additionally may be provided with the other configurations and functions illustrated in FIGS. 1 and 13.

### (5-3-2. Computational processing method)

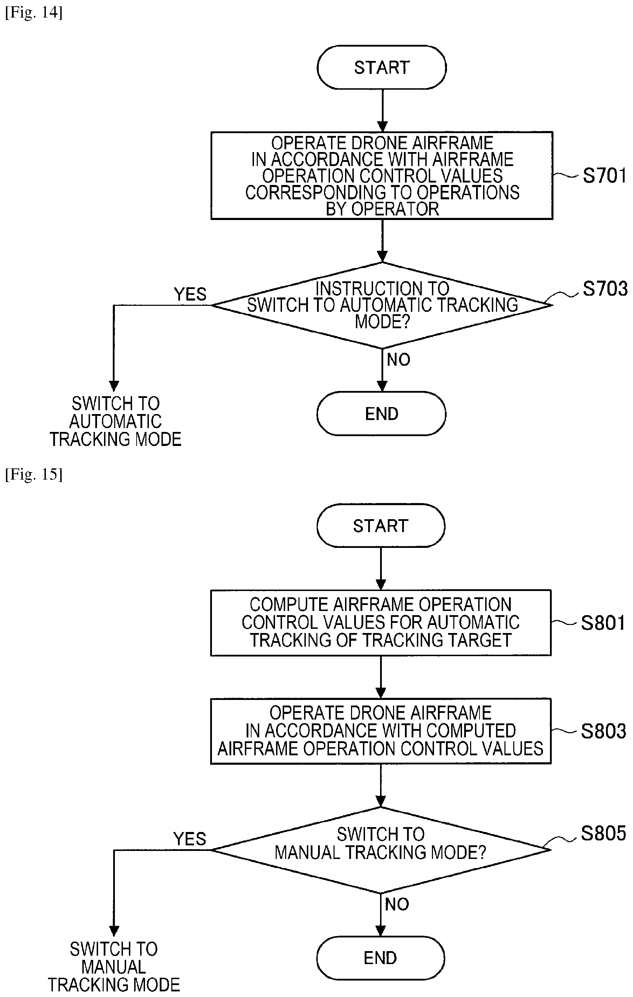

A processing procedure of a computational processing method executed in the computational processing device 514 of the monitoring system 4 described above will be described with reference to FIGS. 14 and 15. FIGS. 14 and 15 are flowcharts illustrating an example of a processing procedure of a computational processing method according to a modification provided with the drone 510.

Herein, a computational process related to the operation of the airframe of the drone 510 and a computational process related to the generation of display image data primarily may be executed as the computational processing in the computational processing device 514. Of these, the method for the computational processing related to the generation of display image data is similar to the foregoing embodiments (for example, such computational processing may be executed by the processing procedures illustrated in FIGS. 6 and 8). Consequently, at this point, computational processing methods related to the operation of the airframe of the drone 510 will be described specifically as a computational processing method in the computational processing device 514.

### (5-3-2-1. Computational processing method according to operation of drone airframe in manual tracking mode)

FIG. 14 illustrates a processing procedure of a computational processing method related to the operation of the airframe of the drone 510 in the manual tracking mode. Referring to FIG. 14, in the computational processing method related to the operation of the airframe of the drone 510 in the manual tracking mode, first, the airframe of the drone 510 is operated in accordance with airframe operation control values corresponding to operations by the operator (step S701). In step S701, by having the airframe of the drone 510 operate in accordance with operations by the operator, the tracking target is tracked manually. The process indicated in step S701 corresponds to the process in which the airframe drive control unit 517 illustrated in FIG. 13 causes the airframe drive mechanism 512 to drive in accordance with airframe operation control values corresponding to operator instructions input via the airframe operation input unit 532.

Next, it is determined whether or not an instruction to switch the tracking mode to the automatic tracking mode has been input (step S703). The process indicated in step S703 corresponds to the process executed by the tracking mode setting unit 515 illustrated in FIG. 13. When there is no input of an instruction, the tracking mode is not switched, and thus the series of processes ends, and the process in step S701 and thereafter is repeated in response to an instruction subsequently input from the operator.

On the other hand, when there is input of an instruction to switch the tracking mode to the automatic tracking mode in step S703, the tracking mode is switched by the tracking mode setting unit 515 in accordance with the instruction, and proceeds to the automatic tracking mode. In the automatic tracking mode, the process illustrated in FIG. 15 discussed later and the process illustrated in FIG. 8 discussed earlier are executed.

### (5-3-2-2. Computational processing method according to operation of drone airframe in automatic tracking mode)

FIG. 15 illustrates a processing procedure of a computational processing method related to the operation of the airframe of the drone 510 in the automatic tracking mode. Referring to FIG. 15, in the computational processing method related to the operation of the airframe of the drone 510 in the automatic tracking mode, first, airframe operation control values for automatically tracking the tracking target are computed, based on captured image data (step S801). The process indicated in step S801 corresponds to the process executed by the automatic tracking airframe operation control value computation unit 516 illustrated in FIG. 13.

Next, the airframe of the drone 510 is operated in accordance with the computed airframe operation control values (step S803). In step S803, by having the airframe of the drone 510 operate in accordance with the airframe operation control values computed in step S801, the tracking target is tracked automatically. The process indicated in step S803 corresponds to the process in which the airframe drive control unit 517 illustrated in FIG. 13 causes the airframe drive mechanism 512 to operate in accordance with airframe operation control values computed by the automatic tracking airframe operation control value computation unit 516.

Next, it is determined whether or not an instruction to switch the tracking mode to the manual tracking mode has been input (step S805). The process indicated in step S805 corresponds to the process executed by the tracking mode setting unit 515 illustrated in FIG. 13. When there is no input of an instruction, the tracking mode is not switched, and thus the series of processes ends, and the process in step S801 and thereafter is repeated at the next timing when airframe operation control values are computed. Note that the interval on which airframe operation control values are computed may be similar to the frame rate at which captured image data is generated, or may be an arbitrary interval slower than the frame rate.

On the other hand, when there is input of an instruction to switch the tracking mode to the manual tracking mode in step S805, the tracking mode is switched by the tracking mode setting unit 515 in accordance with the instruction, and proceeds to the manual tracking mode. In the manual tracking mode, the processes illustrated in FIGS. 14 and 6 discussed earlier are executed.

### (6. Supplemental remarks)

It should be understood by those skilled in the art that various modifications, combinations, sub-combinations and alterations may occur depending on design requirements and other factors insofar as they are within the scope of the appended claims or the equivalents thereof.

For example, the above embodiment and modification thereof describe a case in which the computational processing device that executes various processes in the monitoring system is integrated with the camera or drone in the monitoring system, and a case in which the computational processing device is installed on the operator side, but the technology according to the present disclosure is not limited to such examples. For example, with the technology according to the present disclosure, a monitoring system may also be configured by installing the computational processing device in a location different from both the camera and the various devices installed on the operator side (the display device, the tracking mode switch input device, the PTZ operation input device, and the transmitter), and by communicably connecting these devices. In this case, the computational processing device may be provided in the socalled cloud, for example.

Also, the specific device configuration of the computational processing device may be arbitrary. For example, the computational processing device may be made up of a single device or multiple devices. If the computational processing device is made up of multiple devices, the respective functions included in the computational processing device may be provided distributed across these multiple devices, and by having these devices exchange various information with each other, functions similar to the computational processing device discussed earlier may be realized overall.

In addition, in the foregoing embodiments and modifications, captured image data is recorded in a storage device (memory) provided in the camera or drone, but the technology according to the present disclosure is not limited to such an example. In addition to being recorded in such memory, or instead of being recorded in such memory, captured image data may also be recorded in an external storage device connected to the camera or drone via a network.

In addition, in the foregoing embodiments, a monitoring system that tracks a tracking target for the purpose of the monitoring is configured, but the present disclosure is not limited to such an example. Technology according to the present disclosure is also applicable to other uses. Specifically, technology according to the present disclosure may be applied not only to the purpose of monitoring, but also more broadly to imaging systems that capture images while also tracking imaging targets such as people, animals, or objects, and present an image of the captured imaging target region (imaging region image) to the operator. For example, the purpose of imaging other than monitoring may be for observation of people or the like, or for the recording of an image indicating the activity of people or the like. In other words, in the present disclosure, an observation system having a configuration similar to the monitoring system discussed earlier may also be configured with the purpose of observing people, animals, or objects. Alternatively, in the present disclosure, a recording system having a configuration similar to the monitoring system discussed earlier may also be configured with the purpose of recording the activity of people, animals, or objects. Such an observation system or recording system may be applied favorably in cases such as when imaging an animal for the creation of a documentary program or the like, or when imaging the status of an elderly person living alone in what may be called a watching system. In these cases, the animal or the elderly person becomes the observation target or recording target, in addition to being the tracking target. Note that in the case of observing or recording an observation target or recording target outdoors, if the monitoring system according to the modification provided with a drone discussed earlier is repurposed as an observation system or a recording system, observation or recording with a higher degree of freedom using a freely movable drone may be realized.

In addition, it is also possible to develop a computer program for realizing the respective functions of a computational processing device according to the embodiment and modifications described above, and implement the computer program in a general-purpose computational processing device such as a personal computer (PC). In addition, a computer-readable recording medium storing such a computer program may also be provided. The recording medium may be a magnetic disc, an optical disc, a magneto-optical disc, or flash memory, for example. Furthermore, the above computer program may also be delivered via a network, for example, with or without using a recording medium.

Further, the effects described in this specification are merely illustrative or exemplified effects, and are not limitative. That is, with or in the place of the above effects, the technology according to the present disclosure may achieve other effects that are clear to those skilled in the art based on the description of this specification.

### Reference Signs List

1, 2, 3, 4 monitoring system
110, 210, 310 camera
111 imaging unit
112 drive mechanism
113 memory
114, 250, 314, 514 computational processing device
115, 315, 515 tracking mode setting unit
116, 316 automatic tracking PTZ control value computation unit
117 drive control unit
118, 318, 518 tracking target estimation unit
119, 319, 519 display image data generation unit
120 display device
130 tracking mode switch input device
140 PTZ operation input device
401 person
403 tracking target estimation frame
405 tracking target display frame
510 drone
512 airframe drive mechanism
516 automatic tracking airframe operation control value computation unit
517 airframe drive control unit
530 transmitter
531 tracking mode switch input unit
532 airframe operation input unit

## Claims

1. A processing device (114) comprising:
tracking target estimation circuitry (118) configured to estimate a tracking target (401) in a central area of an image captured in image data by an imaging unit (111) operating in a manual tracking mode, the manual tracking mode being a mode in which the tracking target is tracked by controlling at least one of a pan operation, a tilt operation and a zoom operation of the imaging unit by instructions from an external source;
wherein the tracking target estimation circuitry is further configured to generate a tracking target estimation frame (403) that is overlaid on the image to identify the tracking target in the image; and
wherein the tracking target estimation circuitry is configured to estimate the tracking target and generate the tracking target estimation frame by extracting from a foreground region of the image a region that includes at least one color that appears more frequently in the foreground region than in a background region;
wherein the tracking target estimation circuitry is configured to determine the at least one color by computing respective color histograms of the foreground region and the background region;
wherein the foreground region is a region within a predetermined range from a center of the image, and the background region is a region exceeding the predetermined range from the center of the image.

2. The processing device of claim 1, wherein the circuitry is configured to:
estimate the tracking target and generate the tracking target estimation frame by extracting regions from the image and other images that correspond to one or more moving objects; and
set the tracking target estimation frame to include a center portion of a field of view in the image and other images.

3. The processing device of claim 1, comprising tracking mode setting circuitry (115) configured to respond to a user-actuated mode select signal by changing from the manual tracking mode to an automatic tracking mode, where the automatic tracking mode uses the estimate of the tracking target to begin tracking of the tracking target.

4. The processing device of claim 3, wherein the tracking target estimation circuity is configured to generate the tracking target estimation frame in a different visual format than a tracking target display frame that identifies the tracking target used in the automatic tracking mode.

5. The processing device of claim 3, wherein the user-actuated mode select signal is transmitted wirelessly from a remote device (530).

6. The processing device of claim 5, wherein an output signal from the tracking target estimation circuitry is provided to flight control circuitry (517) that controls flying operations of a device in which the circuitry is contained.

7. The processing device of claim 6, wherein the fight control circuitry controls flight operations of a drone (510).

8. The processing device of claim 3, wherein the tracking mode setting circuity is configured to change from the manual tracking mode to the automatic tracking mode in response to a manually triggered switch signal.

9. A processing system comprising:
a controllable imaging device (110) configured to capture images containing a tracking target (401), and track the tracking target with at least one of a pan operation, a tilt operation, and a zoom operation; and
tracking target estimation circuitry (118) configured to estimate the tracking target in a central area of an image captured in image data by the controllable imagine device operating in a manual tracking mode, the manual tracking mode being a mode in which the tracking target is tracked by controlling the at least one of the pan, the tilt and the zoom operation by instructions from an external source;
wherein the tracking target estimation circuitry is further configured to generate a tracking target estimation frame (403) that is overlaid on the image to identify the tracking target in the image; and
wherein the tracking target estimation circuitry is configured to estimate the tracking target and generate the tracking target estimation frame by extracting from a foreground region of the image a region that includes at least one color that appears more frequently in the foreground region than in a background region;
wherein the tracking target estimation circuitry is configured to determine the at least one color by computing respective color histograms of the foreground region and the background region;
wherein the foreground region is a region within a predetermined range from a center of the image, and the background region is a region exceeding the predetermined range from the center of the image.

10. The processing system of claim 9, wherein:
the controllable imaging device and the tracking target estimation circuitry are included in a camera of a surveillance system, the camera being configured to receive a tracking mode input signal from a switch via a wired connection.

11. The processing system of claim 9, wherein:
the controllable imaging device and the tracking target estimation circuitry are included in a camera of a drone (510), the camera is configured to receive a tracking mode input signal and pan, tilt, zoom instructions via wireless signals.

12. A processing method comprising:
estimating (S203) with tracking target estimation circuitry a tracking target in a central area of an image captured in image data by an imaging unit operating in a manual tracking mode, the manual tracking mode being a mode in which the tracking target is tracked by controlling at least one of a pan operation, a tilt operation and a zoom operation of the imaging unit by instructions from an external source; and
generating (S205) with the circuity a tracking target estimation frame and overlaying the tracking target estimation frame on an image to identify the tracking target in the image;
wherein the estimating includes estimating the tracking target and generating the tracking target estimation frame by extracting from a foreground region of the image of a region that includes at least one color that appears more frequently in the foreground region than a background region;
determining the at least one color by computing with the tracking target estimation circuitry respective color histograms of the foreground region and the background region;
wherein the foreground region is a region within a predetermined range from a center of the image, and the background region is a region exceeding the predetermined range from the center of the image.

13. The processing method of claim 12, wherein the estimating includes estimating the tracking target and generating the tracking target estimation frame by extracting regions in the image and other images that correspond to one or more moving objects and setting the tracking target estimation frame to include a center portion of a field of view in the image and other images.

## Patentansprüche

1. Verarbeitungsvorrichtung (114), umfassend:
Verfolgungsziel-Schätzschaltlogik (118), die konfiguriert ist, um ein Verfolgungsziel (401) in einem mittleren Bereich eines Bildes zu schätzen, das in Bilddaten durch eine Bildgebungseinheit (111) erfasst wird, die in einem manuellen Verfolgungsmodus arbeitet, wobei der manuelle Verfolgungsmodus ein Modus ist, in dem das Verfolgungsziel durch Steuern mindestens eines von einem Schwenkvorgang, einem Neigungsvorgang und einem Zoomvorgang der Bildgebungseinheit durch Anweisungen von einer externen Quelle verfolgt wird;
wobei die Verfolgungsziel-Schätzschaltlogik ferner konfiguriert ist, um einen Verfolgungsziel-Schätzrahmen (403) zu erzeugen, der auf das Bild überlagert wird, um das Verfolgungsziel in dem Bild zu identifizieren; und
wobei die Verfolgungsziel-Schätzschaltlogik konfiguriert ist, um das Verfolgungsziel zu schätzen und den Verfolgungsziel-Schätzrahmen zu erzeugen, indem aus einem Vordergrundbereich des Bildes ein Bereich extrahiert wird, der mindestens eine Farbe einschließt, die im Vordergrundbereich häufiger erscheint als in einem Hintergrundbereich;
wobei die Verfolgungsziel-Schätzschaltlogik konfiguriert ist, um die mindestens eine Farbe durch Berechnen jeweiliger Farbhistogramme des Vordergrundbereichs und des Hintergrundbereichs zu bestimmen;
wobei der Vordergrundbereich ein Bereich innerhalb eines vorbestimmten Bereichs von einer Mitte des Bildes ist, und der Hintergrundbereich ein Bereich ist, der über den vorbestimmten Bereich von der Mitte des Bildes hinausgeht.

2. Verarbeitungsvorrichtung nach Anspruch 1, wobei die Schaltlogik konfiguriert ist zum:
Schätzen des Verfolgungsziels und Erzeugen des Verfolgungsziel-Schätzungsrahmens, indem Bereiche aus dem Bild und anderen Bildern extrahiert werden, die einem oder mehreren sich bewegenden Objekten entsprechen; und
Einstellen des Verfolgungsziel-Schätzungsrahmens, so dass er einen mittleren Abschnitt eines Sichtfelds in dem Bild und anderen Bildern einschließt.

3. Verarbeitungsvorrichtung nach Anspruch 1, umfassend eine Verfolgungsmodus-Einstellschaltlogik (115), die konfiguriert ist, um auf ein benutzeraktiviertes Modusauswahlsignal zu reagieren, indem sie von dem manuellen Verfolgungsmodus zu einem automatischen Verfolgungsmodus wechselt, wobei der automatische Verfolgungsmodus die Schätzung des Verfolgungsziels verwendet, um die Verfolgung des Verfolgungsziels zu beginnen.

4. Verarbeitungsvorrichtung nach Anspruch 3, wobei die Verfolgungsziel-Schätzschaltlogik konfiguriert ist, um den Verfolgungsziel-Schätzrahmen in einem anderen visuellen Format zu erzeugen als einem Verfolgungsziel-Anzeigerahmen, der das in dem automatischen Verfolgungsmodus verwendete Verfolgungsziel identifiziert.

5. Verarbeitungsvorrichtung nach Anspruch 3, wobei das benutzeraktivierte Modusauswahlsignal drahtlos von einer entfernten Vorrichtung (530) übertragen wird.

6. Verarbeitungsvorrichtung nach Anspruch 5, wobei ein Ausgangssignal von der Verfolgungsziel-Schätzschaltlogik an eine Flugsteuerschaltlogik (517) bereitgestellt wird, die Flugvorgänge einer Vorrichtung steuert, in welcher die Schaltlogik enthalten ist.

7. Verarbeitungsvorrichtung nach Anspruch 6, wobei die Flugsteuerschaltlogik Flugvorgänge einer Drohne (510) steuert.

8. Verarbeitungsvorrichtung nach Anspruch 3, wobei die Verfolgungsmodus-Einstellschaltung konfiguriert ist, um als Reaktion auf ein manuell ausgelöstes Schaltsignal aus dem manuellen Verfolgungsmodus in den automatischen Verfolgungsmodus zu wechseln.

9. Verarbeitungssystem, umfassend:
eine steuerbare Bildgebungsvorrichtung (110), die konfiguriert ist, um Bilder zu erfassen, die ein Verfolgungsziel (401) enthalten, und das Verfolgungsziel mit mindestens einem von einem Schwenkvorgang, einem Neigungsvorgang und einem Zoomvorgang zu verfolgen; und
Verfolgungsziel-Schätzungsschaltlogik (118), die konfiguriert ist, um das Verfolgungsziel in einem mittleren Bereich eines in Bilddaten erfassten Bildes zu schätzen, das von der steuerbaren Bildgebungsvorrichtung aufgenommen wurde, die in einem manuellen Verfolgungsmodus arbeitet, wobei der manuelle Verfolgungsmodus ein Modus ist, in dem das Verfolgungsziel durch Steuerung mindestens eines des Schwenk-, Neigungs- und Zoomvorgangs durch Anweisungen von einer externen Quelle verfolgt wird;
wobei die Verfolgungsziel-Schätzschaltlogik ferner konfiguriert ist, um einen Verfolgungsziel-Schätzrahmen (403) zu erzeugen, der auf das Bild überlagert wird, um das Verfolgungsziel in dem Bild zu identifizieren; und
wobei die Verfolgungsziel-Schätzschaltlogik konfiguriert ist, um das Verfolgungsziel zu schätzen und den Verfolgungsziel-Schätzrahmen zu erzeugen, indem aus einem Vordergrundbereich des Bildes ein Bereich extrahiert wird, der mindestens eine Farbe einschließt, die im Vordergrundbereich häufiger erscheint als in einem Hintergrundbereich;
wobei die Verfolgungsziel-Schätzschaltlogik konfiguriert ist, um die mindestens eine Farbe durch Berechnen jeweiliger Farbhistogramme des Vordergrundbereichs und des Hintergrundbereichs zu bestimmen;
wobei der Vordergrundbereich ein Bereich innerhalb eines vorbestimmten Bereichs von einer Mitte des Bildes ist, und der Hintergrundbereich ein Bereich ist, der über den vorbestimmten Bereich von der Mitte des Bildes hinausgeht.

10. Verarbeitungssystem nach Anspruch 9, wobei:
die steuerbare Bildgebungsvorrichtung und die Verfolgungsziel-Schätzschaltlogik in einer Kamera eines Überwachungssystems eingeschlossen sind, wobei die Kamera konfiguriert ist, um ein Verfolgungsmodus-Eingangssignal von einem Schalter über eine drahtgebundene Verbindung zu empfangen.

11. Verarbeitungssystem nach Anspruch 9, wobei:
die steuerbare Bildgebungsvorrichtung und die Verfolgungsziel-Schätzschaltung in einer Kamera einer Drohne (510) eingeschlossen sind, die Kamera konfiguriert ist, um ein Verfolgungsmodus-Eingangssignal und Schwenk-, Neigungs-, Zoomanweisungen über drahtlose Signale zu empfangen.

12. Verarbeitungsverfahren, umfassend:
Schätzen (S203) mit einer Verfolgungsziel-Schätzschaltung eines Verfolgungsziels in einem mittleren Bereich eines in Bilddaten erfassten Bildes durch eine Bildgebungseinheit, die in einem manuellen Verfolgungsmodus arbeitet, wobei der manuelle Verfolgungsmodus ein Modus ist, in dem das Verfolgungsziel durch Steuern mindestens eines von einem Schwenkvorgang, einem Neigungsvorgang und einem Zoomvorgang der Bildgebungseinheit durch Anweisungen von einer externen Quelle verfolgt wird; und
Erzeugen (S205) mit der Schaltlogik eines Verfolgungsziel-Schätzrahmens und Überlagern des Verfolgungsziel-Schätzrahmens auf ein Bild, um das Verfolgungsziel in dem Bild zu identifizieren;
wobei das Schätzen das Schätzen des Verfolgungsziels und das Erzeugen des Verfolgungsziel-Schätzrahmens durch Extrahieren aus einem Vordergrundbereich des Bildes eines Bereichs umfasst, der mindestens eine Farbe enthält, die im Vordergrundbereich häufiger erscheint als in einem Hintergrundbereich;
Bestimmen der mindestens einen Farbe durch Berechnen mit der Verfolgungsziel-Schätzschaltlogik jeweiliger Farbhistogramme des Vordergrundbereichs und des Hintergrundbereichs;
wobei der Vordergrundbereich ein Bereich innerhalb eines vorbestimmten Bereichs von einer Mitte des Bildes ist, und der Hintergrundbereich ein Bereich ist, der über den vorbestimmten Bereich von der Mitte des Bildes hinausgeht.

13. Verarbeitungsverfahren nach Anspruch 12, wobei das Schätzen das Schätzen des Verfolgungsziels und das Erzeugen des Verfolgungsziel-Schätzrahmens durch Extrahieren von Bereichen in dem Bild und anderen Bildern, die einem oder mehreren sich bewegenden Objekten entsprechen, und das Einstellen des Verfolgungsziel-Schätzrahmens zum Einschließen eines mittleren Abschnitts eines Sichtfelds in dem Bild und anderen Bildern einschließt.

## Revendications

1. Dispositif de traitement (114) comprenant :
un circuit d'estimation de cible de suivi (118) configuré pour estimer une cible de suivi (401) dans une zone centrale d'une image capturée dans des données d'image par une unité d'imagerie (111) fonctionnant dans un mode de suivi manuel, le mode de suivi manuel étant un mode dans lequel la cible de suivi est suivie en commandant au moins l'une parmi une opération de panoramique, une opération d'inclinaison et une opération de zoom de l'unité d'imagerie par des instructions provenant d'une source externe ;
dans lequel le circuit d'estimation de cible de suivi est en outre configuré pour générer une trame d'estimation de cible de suivi (403) qui est superposée à l'image pour identifier la cible de suivi dans l'image ; et
dans lequel le circuit d'estimation de cible de suivi est configuré pour estimer la cible de suivi et générer la trame d'estimation de cible de suivi en extrayant d'une région de premier plan de l'image une région qui comporte au moins une couleur qui apparaît plus fréquemment dans la région de premier plan que dans une région d'arrière-plan ;
dans lequel le circuit d'estimation de cible de suivi est configuré pour déterminer l'au moins une couleur en calculant des histogrammes de couleur respectifs de la région de premier plan et de la région d'arrière-plan ;
dans lequel la région de premier plan est une région située dans une plage prédéterminée à partir d'un centre de l'image, et la région d'arrière-plan est une région dépassant la plage prédéterminée à partir du centre de l'image.

2. Dispositif de traitement selon la revendication 1, dans lequel le circuit est configuré pour :
estimer la cible de suivi et générer la trame d'estimation de cible de suivi en extrayant des régions de l'image et d'autres images qui correspondent à un ou des objets en mouvement ; et
régler la trame d'estimation cible de suivi pour inclure une partie centrale d'un champ de vision dans l'image et d'autres images.

3. Dispositif de traitement selon la revendication 1, comprenant un circuit de réglage de mode de suivi (115) configuré pour répondre à un signal de sélection de mode actionné par l'utilisateur en passant du mode de suivi manuel à un mode de suivi automatique, où le mode de suivi automatique utilise l'estimation de la cible de suivi pour commencer le suivi de la cible de suivi.

4. Dispositif de traitement selon la revendication 3, dans lequel le circuit d'estimation de cible de suivi est configuré pour générer la trame d'estimation de cible de suivi dans un format visuel différent de celui d'une trame d'affichage de cible de suivi qui identifie la cible de suivi utilisée dans le mode de suivi automatique.

5. Dispositif de traitement selon la revendication 3, dans lequel le signal de sélection de mode actionné par l'utilisateur est transmis sans fil à partir d'un dispositif distant (530).

6. Dispositif de traitement selon la revendication 5, dans lequel un signal de sortie du circuit d'estimation de cible de suivi est fourni au circuit de commande de vol (517) qui commande les opérations de vol d'un dispositif dans lequel le circuit est contenu.

7. Dispositif de traitement selon la revendication 6, dans lequel le circuit de commande de vol commande les opérations de vol d'un drone (510).

8. Dispositif de traitement selon la revendication 3, dans lequel la circuiterie de réglage de mode de suivi est configurée pour passer du mode de suivi manuel au mode de suivi automatique en réponse à un signal de commutation déclenché manuellement.

9. Système de traitement comprenant :
un dispositif d'imagerie commandable (110) configuré pour capturer des images contenant une cible de suivi (401), et suivre la cible de suivi avec au moins l'une parmi une opération de panoramique, une opération d'inclinaison et une opération de zoom ; et
un circuit d'estimation de cible de suivi (118) configuré pour estimer la cible de suivi dans une zone centrale d'une image capturée dans des données d'image par le dispositif d'imagerie commandable fonctionnant en mode de suivi manuel, le mode de suivi manuel étant un mode dans lequel la cible de suivi est suivie en commandant l'au moins une parmi l'opération de panoramique, d'inclinaison et de zoom par des instructions provenant d'une source externe ;
dans lequel le circuit d'estimation de cible de suivi est en outre configuré pour générer une trame d'estimation de cible de suivi (403) qui est superposée à l'image pour identifier la cible de suivi dans l'image ; et
dans lequel le circuit d'estimation de cible de suivi est configuré pour estimer la cible de suivi et générer la trame d'estimation de cible de suivi en extrayant d'une région de premier plan de l'image une région qui comporte au moins une couleur qui apparaît plus fréquemment dans la région de premier plan que dans une région d'arrière-plan ;
dans lequel le circuit d'estimation de cible de suivi est configuré pour déterminer l'au moins une couleur en calculant des histogrammes de couleur respectifs de la région de premier plan et de la région d'arrière-plan ;
dans lequel la région de premier plan est une région située dans une plage prédéterminée à partir d'un centre de l'image, et la région d'arrière-plan est une région dépassant la plage prédéterminée à partir du centre de l'image.

10. Système de traitement selon la revendication 9, dans lequel :
le dispositif d'imagerie commandable et le circuit d'estimation de cible de suivi sont inclus dans une caméra d'un système de surveillance, la caméra étant configurée pour recevoir un signal d'entrée de mode de suivi à partir d'un commutateur par l'intermédiaire d'une connexion câblée.

11. Système de traitement selon la revendication 9, dans lequel :
le dispositif d'imagerie commandable et le circuit d'estimation de cible de suivi sont inclus dans une caméra d'un drone (510), la caméra est configurée pour recevoir un signal d'entrée de mode de suivi et des instructions de panoramique, d'inclinaison, et de zoom par l'intermédiaire de signaux sans fil.

12. Procédé de traitement comprenant :
l'estimation (S203), à l'aide d'un circuit d'estimation de cible de suivi, d'une cible de suivi dans une zone centrale d'une image capturée dans des données d'image par une unité d'imagerie fonctionnant en mode de suivi manuel, le mode de suivi manuel étant un mode dans lequel la cible de suivi est suivie en commandant au moins l'une parmi une opération de panoramique, une opération d'inclinaison et une opération de zoom de l'unité d'imagerie par des instructions provenant d'une source externe ; et
la génération (S205), avec le circuit, d'une trame d'estimation de cible de suivi et la superposition de la trame d'estimation de cible de suivi sur une image pour identifier la cible de suivi dans l'image ;
dans lequel l'estimation comporte l'estimation de la cible de suivi et la génération de la trame d'estimation de cible de suivi par extraction d'une région d'avant-plan de l'image d'une région qui comporte au moins une couleur qui apparaît plus fréquemment dans la région de premier plan qu'une région d'arrièreplan ;
la détermination de l'au moins une couleur en calculant, avec le circuit d'estimation de cible de suivi, des histogrammes de couleur respectifs de la région d'avant-plan et de la région d'arrière-plan ;
dans lequel la région de premier plan est une région située dans une plage prédéterminée à partir d'un centre de l'image, et la région d'arrière-plan est une région dépassant la plage prédéterminée à partir du centre de l'image.

13. Procédé de traitement selon la revendication 12, dans lequel l'estimation comporte l'estimation de la cible de suivi et la génération de la trame d'estimation de cible de suivi en extrayant des régions dans l'image et d'autres images qui correspondent à un ou des objets en mouvement et le réglage de la trame d'estimation de cible de suivi pour inclure une partie centrale d'un champ de vision dans l'image et d'autres images.
